# EUROPEAN PATENT APPLICATION

(11) **EP 4 391 656 A1**
(43) Date of publication of application: **26.06.2024**
(21) Application number: 22858725.9
(22) Date of filing: 17.08.2022
(51) Int. Cl.: H04W 52/02, H04W 76/28, H04W 72/12, H04L 1/18, H04W 4/40, H04W 92/18

(54) **SL DRX OPERATION METHOD AND DEVICE BASED ON SIDELINK TRANSMISSION STATUS INDICATION IN NR V2X**

(30) Priority: 17.08.2021 KR 20210108308
(71) Applicant: LG Electronics Inc., Yeongdeungpo-gu Seoul 07336 (KR)
(72) Inventor: PARK, Giwon, Seoul 06772 (KR); BACK, Seoyoung, Seoul 06772 (KR); LEE, Seungmin, Seoul 06772 (KR); HONG, Jongwoo, Seoul 06772 (KR)
(74) Representative: Frenkel, Matthias Alexander
(86) International application number: PCT/KR2022/012230
(87) International publication number: WO 2023/022488

(57) **Abstract**

Proposed is a method of operating a first device (100) in a wireless communication system. The method may comprise the steps of: receiving SCI for PSSCH scheduling, from a second device (200) and through a PSCCH in an active time of SL DRX configuration, the SCI including information that is about the remaining PDB and relates to a MAC PDU; transmitting HARQ NACK information about the MAC PDU to the second device (200); and skipping, on the basis of the remaining PDB, the starting of a first timer related to the transmission of the HARQ NACK information.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication apparatuses require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

### DISCLOSURE

### TECHNICAL SOLUTION

According to an embodiment of the present disclosure, a method for performing, by a first device, wireless communication may be proposed. For example, the method may comprise: obtaining a sidelink (SL) discontinuous reception (DRX) configuration, including information for an SL DRX cycle and information for a plurality of timers related to an active time; receiving, from a second device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); monitoring, the MAC PDU, which is transmitted from the second device through the PSSCH, within the active time; transmitting, to the second device, hybrid automatic repeat request (HARQ) negative acknowledge (NACK) information for the MAC PDU; and skipping a start of a first timer related to the transmission of the HARQ NACK information, which is included in the plurality of timers, based on the remaining PDB.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration, including information for an SL DRX cycle and information for a plurality of timers related to an active time; receive, from a second device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); monitoring, the MAC PDU, which is transmitted from the second device through the PSSCH, within the active time; transmitting, to the second device, hybrid automatic repeat request (HARQ) negative acknowledge (NACK) information for the MAC PDU; and skipping a start of a first timer related to the transmission of the HARQ NACK information, which is included in the plurality of timers, based on the remaining PDB.

According to an embodiment of the present disclosure, a device adapted to control a first user equipment (UE) may be proposed. For example, the device may comprise: one or more processors; and one or more memories operably connectable to the one or more processors and storing instructions. For example, the one or more processors execute the instructions to: obtain a sidelink (SL) discontinuous reception (DRX) configuration, including information for an SL DRX cycle and information for a plurality of timers related to an active time; receive, from a second UE, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); monitoring, the MAC PDU, which is transmitted from the second UE through the PSSCH, within the active time; transmitting, to the second UE, hybrid automatic repeat request (HARQ) negative acknowledge (NACK) information for the MAC PDU; and skipping a start of a first timer related to the transmission of the HARQ NACK information, which is included in the plurality of timers, based on the remaining PDB.

According to an embodiment of the present disclosure, a non-transitory computer-readable storage medium storing instructions that, when executed, cause a first device to: obtain a sidelink (SL) discontinuous reception (DRX) configuration, including information for an SL DRX cycle and information for a plurality of timers related to an active time; receive, from a second device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU);

According to an embodiment of the present disclosure, a method for performing, by a second device, wireless communication may be proposed. For example, the method may comprise: transmitting, to a first device, information related to a sidelink (SL) discontinuous reception (DRX) configuration including information for an SL DRX cycle and information for a plurality of timers related to an active time; transmitting, to the first device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); transmitting, to the first device, the MAC PDU through the PSSCH, within the active time; and receiving, from the first device, hybrid automatic repeat request (HARQ) negative acknowledge (NACK) information for the MAC PDU, wherein start of a first timer related to a transmission of the HARQ NACK information, which is included in the plurality of timers, may be skipped based on the remaining PDB.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: transmit, to a first device, information related to a sidelink (SL) discontinuous reception (DRX) configuration including information for an SL DRX cycle and information for a plurality of timers related to an active time; transmit, to the first device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); transmit, to the first device, the MAC PDU through the PSSCH, within the active time; and receive, from the first device, hybrid automatic repeat request (HARQ) negative acknowledge (NACK) information for the MAC PDU, wherein start of a first timer related to a transmission of the HARQ NACK information, which is included in the plurality of timers, may be skipped based on the remaining PDB.

### ADVANTAGEOUS EFFECTS

A UE can efficiently perform sidelink communication.

### BRIEF DESCRIPTION OF THE DRAWINGS

FIG. 1 shows a structure of an NR system, based on an embodiment of the present disclosure.
FIG. 2 shows a radio protocol architecture, based on an embodiment of the present disclosure.
FIG. 3 shows a structure of a radio frame of an NR, based on an embodiment of the present disclosure.
FIG. 4 shows a structure of a slot of an NR frame, based on an embodiment of the present disclosure.
FIG. 5 shows an example of a BWP, based on an embodiment of the present disclosure.
FIG. 6 shows a procedure of performing V2X or SL communication by a UE based on a transmission mode, based on an embodiment of the present disclosure.
FIG. 7 shows three cast types, based on an embodiment of the present disclosure.
FIG. 8 shows a procedure for a receiving UE to skip the start of an SL DRX timer, according to one embodiment of the present disclosure.
FIG. 9 shows a procedure for a receiving UE to skip the start of an SL DRX timer, according to one embodiment of the present disclosure.
FIG. 10 shows a procedure for a first device to perform wireless communication, according to one embodiment of the present disclosure.
FIG. 11 shows a procedure for a second device to perform wireless communication, according to one embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B': For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B': For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

For terms and techniques used herein that are not specifically described, reference may be made to wireless communication standards documents published prior to the filing of this specification.

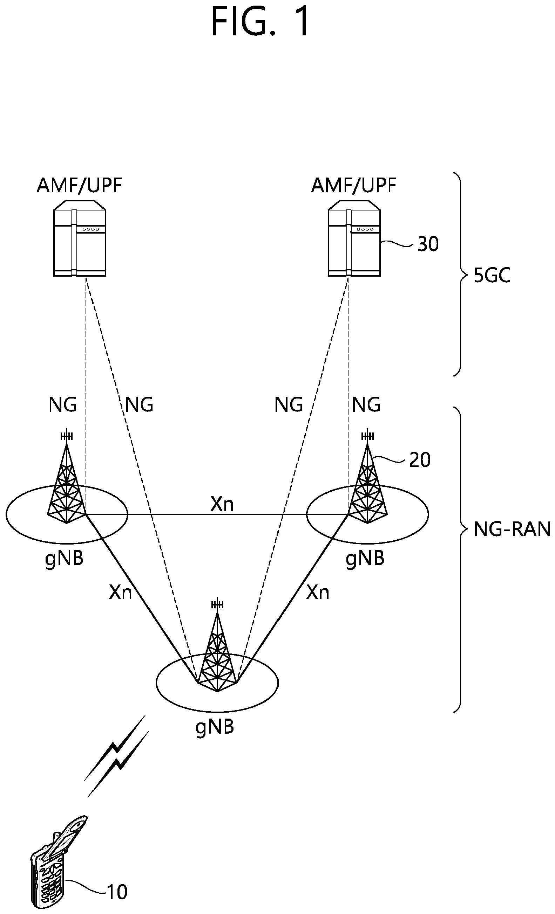

FIG. 1 shows a structure of an NR system, based on an embodiment of the present disclosure. The embodiment of FIG. 1 may be combined with various embodiments of the present disclosure.

Referring to FIG. 1, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 1 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

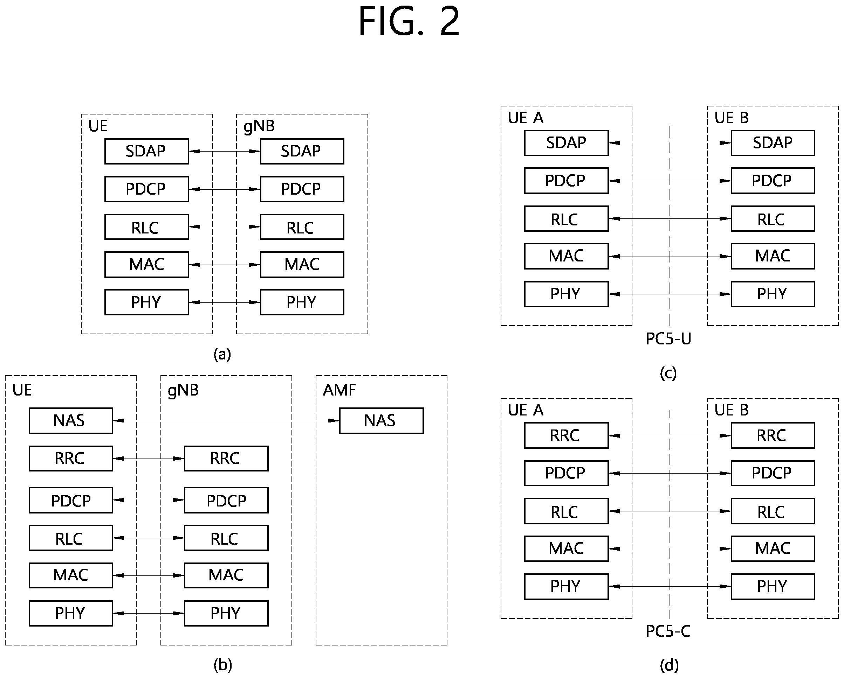

FIG. 2 shows a radio protocol architecture, based on an embodiment of the present disclosure. The embodiment of FIG. 2 may be combined with various embodiments of the present disclosure. Specifically, (a) of FIG. 2 shows a radio protocol stack of a user plane for Uu communication, and (b) of FIG. 2 shows a radio protocol stack of a control plane for Uu communication, (c) of FIG. 2 shows a radio protocol stack of a user plane for SL communication, and (d) of FIG. 2 shows a radio protocol stack of a control plane for SL communication.

Referring to FIG. 2, a physical layer provides an higher layer with an information transfer service through a physical channel. The physical layer is connected to a medium access control (MAC) layer which is an higher layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a specific service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

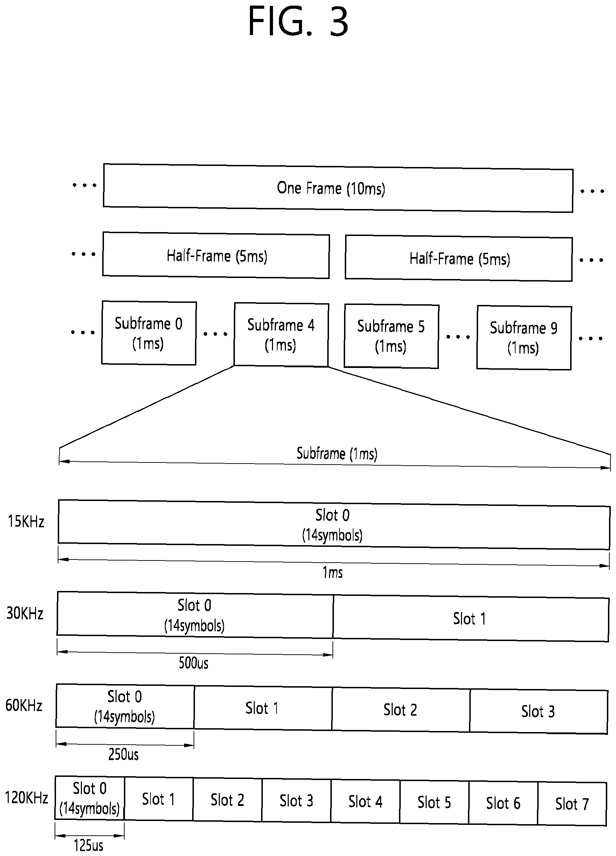

FIG. 3 shows a structure of a radio frame of an NR, based on an embodiment of the present disclosure. The embodiment of FIG. 3 may be combined with various embodiments of the present disclosure.

Referring to FIG. 3, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

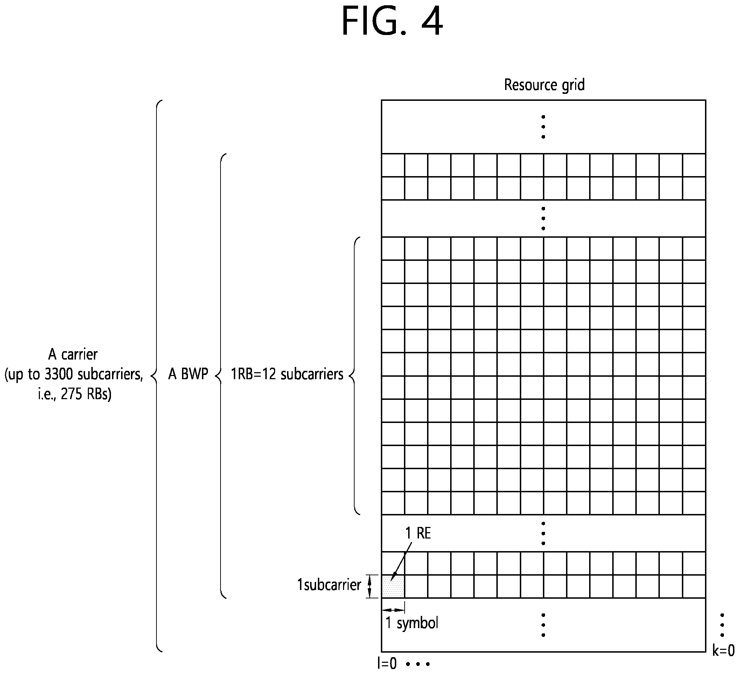

FIG. 4 shows a structure of a slot of an NR frame, based on an embodiment of the present disclosure. The embodiment of FIG. 4 may be combined with various embodiments of the present disclosure.

Referring to FIG. 4, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

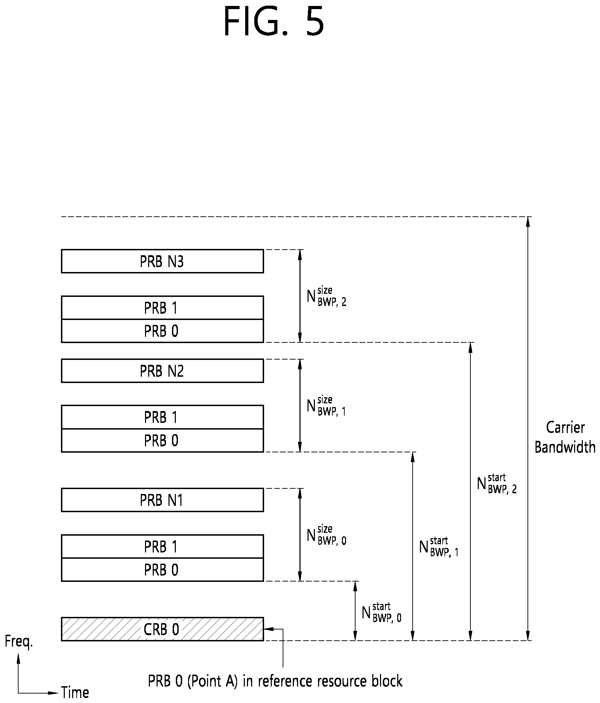

FIG. 5 shows an example of a BWP, based on an embodiment of the present disclosure. The embodiment of FIG. 5 may be combined with various embodiments of the present disclosure. It is assumed in the embodiment of FIG. 5 that the number of BWPs is 3.

Referring to FIG. 5, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

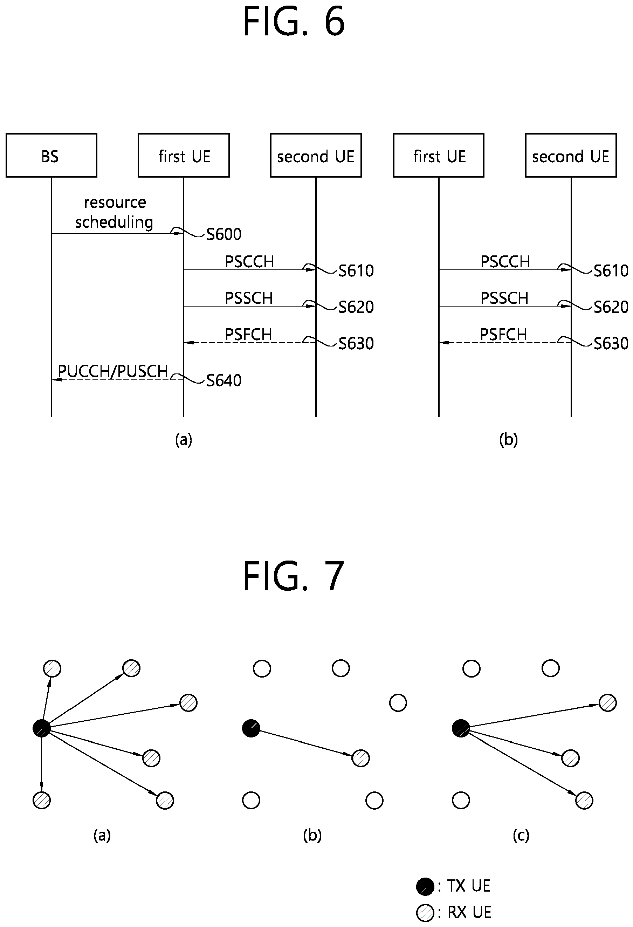

FIG. 6 shows a procedure of performing V2X or SL communication by a UE based on a transmission mode, based on an embodiment of the present disclosure. The embodiment of FIG. 6 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 6 shows a UE operation related to an LTE transmission mode 1 or an LTE transmission mode 3. Alternatively, for example, (a) of FIG. 6 shows a UE operation related to an NR resource allocation mode 1. For example, the LTE transmission mode 1 may be applied to general SL communication, and the LTE transmission mode 3 may be applied to V2X communication.

For example, (b) of FIG. 6 shows a UE operation related to an LTE transmission mode 2 or an LTE transmission mode 4. Alternatively, for example, (b) of FIG. 6 shows a UE operation related to an NR resource allocation mode 2.

Referring to (a) of FIG. 6, in the LTE transmission mode 1, the LTE transmission mode 3, or the NR resource allocation mode 1, a base station may schedule SL resource(s) to be used by a UE for SL transmission. For example, in step S600, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S610, the first UE may transmit a PSCCH (e.g., sidelink control information (SCI) or 1^{st}-stage SCI) to a second UE based on the resource scheduling. In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE. For example, HARQ feedback information (e.g., NACK information or ACK information) may be received from the second UE through the PSFCH. In step S640, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 6, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S610, a first UE which has selected resource(s) from a resource pool by itself may transmit a PSCCH (e.g., sidelink control information (SCI) or 1^{st}-stage SCI) to a second UE by using the resource(s). In step S620, the first UE may transmit a PSSCH (e.g., 2^{nd}-stage SCI, MAC PDU, data, etc.) related to the PSCCH to the second UE. In step S630, the first UE may receive a PSFCH related to the PSCCH/PSSCH from the second UE.

Referring to (a) or (b) of FIG. 6, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{SubChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
   - Beta_offset indicator - 2 bits as provided by higher layer parameter sl-BetaOffsets2ndSCI
   - Number of DMRS port - 1 bit as defined in Table 6
   - Modulation and coding scheme - 5 bits
   - Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
   - PSFCH overhead indication - 1 bit if higher layer parameter sl-PSFCH-Period = 2 or 4; 0 bit otherwise
   - Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 6, in step S630, the first UE may receive the PSFCH. For example, the first UE and the second UE may determine a PSFCH resource, and the second UE may transmit HARQ feedback to the first UE using the PSFCH resource.

The following describes a terminal procedure to report HARQ-ACK on a sidelink.

A UE may be instructed by SCI format that schedules a reception of PSSCH on one or more subchannels from N^{PSSCH}_{subch} to transmit a PSFCH that includes HARQ-ACK information in response to the reception of a PSSCH. A UE provides HARQ-ACK information including ACK or NACK, or NACK only.

A UE may be provided with the number of slots in a resource pool for PSFCH transmission occasion resources by sl-PSFCH-Period-r16. If the number is zero, PSFCH transmission from a UE is disabled in the resource pool. A UE expects to have a PSFCH transmission occasion resource in slot t'ₖ^{SL} (0≤k < T'ₘₐₓ) if k mod N^{PSFCH}_{PSSCH} = 0, where t'ₖ^{SL} is a slot in the resource pool, and T'ₘₐₓ is the number of slots in the resource pool within 10240 msec, and N^{PSFCH}_{PSSCH} is provided in sl-PSFCH-Period-r16. A UE may be instructed by the upper layer not to transmit a PSFCH in response to the reception of a PSSCH. If a UE receives a PSSCH in the resource pool and the HARQ feedback enabled/disabled indicator field included in the associated SCI format 2-A or SCI format 2-B has a value of 1, the UE provides HARQ-ACK information via PSFCH transmission from in resource pool. A UE transmits the PSFCH in a first slot, wherein the first slot is the slot including a PSFCH resource and after the minimum number of slots provided by sl-MinTimeGapPSFCH-r16 of the resource pool after the last slot of the PSSCH reception.

A UE is provided by sl-PSFCH-RB-Set-r16 with M^{PSFCH}_{PRB,set} of PRBs in a resource pool for PSFCH transmissions on PRBs in the resource pool. For the number of PSSCH slots related to a PSFCH slot that is less than or equal to N_{subch} and N^{PSFCH}_{PSSCH}, the number of subchannels for the resource pool provided by sl-NumSubchannel, a UE allocates the PRB [(i+j-N^{PSFCH}_{PSSCH})-M^{PSFCH}_{subch,slot}, (i+1+j-N^{PSFCH}_{PSSCH})-M^{PSFCH}_{subch,slot}-1] among the M_{PRB, set}^{PSFCH} PRB for slot i and subchannel j among the PSSCH slots associated with the PSFCH slot. Here, M^{PSFCH}_{subch,slot} = M^{PSFCH}_{PRB,set} / (N_{subch}-^{NPSFCH}_{PSSCH}), 0 ≤ i < N^{PSFCH}_{PSSCH}, 0 ≤ j < N_{subch}, and the allocations starts in ascending order for i and continues in ascending order for j. A UE expects M^{PSFCH}_{PRB,set} to be a multiple of N_{Subch}·N^{PSFCH}_{PSSCH}.

A UE determines the number of available PSFCH resources for multiplexing HARQ-ACK information included in a PSFCH transmission as R^{PSFCH}_{PRB,CS} = N^{PSFCH}_{type}·M^{PSFCH}_{subch,slot}-N^{PSFCH}_{CS}. Here, N^{PSFCH}_{CS} may be the number of cyclic shift pairs for the resource pool, and based on an indication by the higher layer,
- N^{PSFCH}_{type} = 1, and M^{PSFCH}_{subch,slot} PRB may be related to the starting subchannel of the corresponding PSSCH,
- N^{PSFCH}_{type} = N^{PSSCH}_{subch} and N^{PSSCH}_{subch}·M^{PSFCH}_{subch,slot} PRB is related to one or more subchannels among N^{PSSCH}_{subch} subchannels of the corresponding PSSCH.

A PSFCH resource is indexed first in ascending order of a PRB indexes among N^{PSFCH}_{type}·M^{PSFCH}_{subch,slot} PRBs, after then, it is indexed in ascending order of cyclic shift pair indexes among N^{PSFCH}_{CS} cyclic shift pairs.

A UE determines an index of a PSFCH resource for a PSFCH transmission in response to the PSSCH reception as (P_{ID} + M_{ID}) mod R^{PSFCH}_{PRB,CS}. Here, P_{ID} is a physical layer source ID provided by SCI format 2-A or 2-B scheduling a PSSCH reception, M_{ID} is an ID of a UE receiving a PSSCH, indicated from the higher layer when a UE detects SCI format 2-A in which a cast type indicator field value is "01", M_{ID} is 0 otherwise.

A UE determines m₀ value for calculating a cyclic shift α value from N^{PSFCH}_{CS} and a cyclic shift pair index which corresponds to a PSFCH resource index using Table 8.

**Table 8**

| N^{PSFCH}_{CS} | m₀ | | | | | |
|---|---|---|---|---|---|---|
| | Cyclic shift pair index 0 | Cyclic shift pair index 1 | Cyclic shift pair index 2 | Cyclic shift pair index 3 | Cyclic shift pair index 4 | Cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

As shown in Table 9, when a UE detects SCI format 2-A with a cast type indicator field value of "01" or "10", or as shown in Table 10, when a UE detects SCI format 2-B or SCI format 2-A with a cast type indicator field value of "11", a UE determines m_{CS} the value for calculating a cyclic shift α value. A UE applies one cyclic shift among cyclic shifts to a sequence used in a PSFCH transmission.

**[Table 9]**

| | | |
|---|---|---|
| HARQ-ACK Value | 0 (NACK) | 1 (ACK) |
| Sequence cyclic shift | 0 | 6 |

**[Table 10]**

| | | |
|---|---|---|
| HARQ-ACK Value | 0 (NACK) | 1 (ACK) |
| Sequence cyclic shift | 0 | N/A |

Referring to (a) of FIG. 6, in step S640, the first UE may transmit SL HARQ feedback to the base station through the PUCCH and/or the PUSCH.

FIG. 7 shows three cast types, based on an embodiment of the present disclosure. The embodiment of FIG. 7 may be combined with various embodiments of the present disclosure. Specifically, FIG. 7(a) shows a broadcast type of SL communication, FIG. 7(b) shows a unicast type of SL communication, and FIG. 7(c) shows a groupcast type of SL communication. In the case of unicast type SL communication, a UE may perform one-to-one communication with other UEs. In the case of groupcast type SL communication, a UE may perform SL communication with one or more UEs in a group to which it belongs. In various embodiments of the present disclosure, SL groupcast communication may be replaced by SL multicast communication, SL one-to-many communication, and the like.

In this specification, the wording "configuration or definition" may be interpreted as being configured (in advance) by a base station or network (e.g., through predefined signaling (e.g., SIB signaling, MAC signaling, RRC signaling). For example, "A may be configured" may include "a base station or network (pre)configures/defines or informs the UE of A". Alternatively, the wording "configuration or definition" may be interpreted as being configured or defined in advance by the system. For example, "A may be configured" may include "A is configured/defined in advance by the system".

Referring to the standard documentation, some procedures and technical specifications relevant to this disclosure are as follows.

**[Table 11]**

| 3GPP TS 38.321 V16.2.1 | |
|---|---|
| The MAC entity may be configured by RRC with a DRX functionality that controls the UE's PDCCH monitoring activity for the MAC entity's C-RNTI, CI-RNTI, CS-RNTI, INT-RNTI, SFI-RNTI, SP-CSI-RNTI, TPC-PUCCH-RNTI, TPC-PUSCH-RNTI, TPC-SRS-RNTI, and AI-RNTI. When using DRX operation, the MAC entity shall also monitor PDCCH according to requirements found in other clauses of this specification. When in RRC_CONNECTED, if DRX is configured, for all the activated Serving Cells, the MAC entity may monitor the PDCCH discontinuously | |
| using the DRX operation specified in this clause; otherwise the MAC entity shall monitor the PDCCH as specified in TS 38.213 [6]. | |
| | NOTE 1: If Sidelink resource allocation mode 1 is configured by RRC, a DRX functionality is not configured. |
| RRC controls DRX operation by configuring the following parameters: | |
| | *- drx-onDurationTimer.* the duration at the beginning of a DRX cycle; |
| | - *drx-SlotOffset*: the delay before starting the *drx-onDurationTimer,* |
| | - *drx-InactivityTimer*: the duration after the PDCCH occasion in which a PDCCH indicates a new UL or DL transmission for the MAC entity; |
| | - *drx-RetransmissionTimerDL* (per DL HARQ process except for the broadcast process): the maximum duration until a DL retransmission is received; |
| | - *drx-RetransmissionTimerUL* (per UL HARQ process): the maximum duration until a grant for UL retransmission is received; |
| | - *drx-LongCycleStartOffset*: the Long DRX cycle and *drx-StartOffsetwhich* defines the subframe where the Long and Short DRX cycle starts; |
| | - *drx-ShortCycle* (optional): the Short DRX cycle; |
| | - *drx-ShortCydeTimer* (optional): the duration the UE shall follow the Short DRX cycle; |
| | - *drx-HARQ-RTT-TimerDL* (per DL HARQ process except for the broadcast process): the minimum duration before a DL assignment for HARQ retransmission is expected by the MAC entity; |
| | - *drx-HARQ-RTT-TimerUL* (per UL HARQ process): the minimum duration before a UL HARQ retransmission grant is expected by the MAC entity; |
| | - *ps-Wakeup* (optional): the configuration to start associated drx-*onDurationTimer* in case DCP is monitored but not detected; |
| | - *ps-TransmitOtherPeriodicCSI* (optional): the configuration to report periodic CSI that is not L1-RSRP on PUCCH during the time duration indicated by *drx-onDurationTimer* in case DCP is configured but associated drx-*onDurationTimer* is not started; |
| | - *ps-TransmitPeriodicL1-RSRP* (optional): the configuration to transmit periodic CSI that is L1-RSRP on PUCCH during the time duration indicated by *drx-ondurationTimer* in case DCP is configured but associated drx-*onDurationTimer* is not started. |
| Serving Cells of a MAC entity may be configured by RRC in two DRX groups with separate DRX parameters. When RRC does not configure a secondary DRX group, there is only one DRX group and all Serving Cells belong to that one DRX group. When two DRX groups are configured, each Serving Cell is uniquely assigned to either of the two groups. The DRX parameters that are separately configured for | |
| each DRX group are: *drx-onDurationTimer, drx-InactivityTimer.* The DRX parameters that are common to the DRX groups are: *drx-SlotOffset, drx-RetransmissionTimerDL, drx-RetransmissionTimerUL, drx-LongCycleStartOffset, drx-ShortCyde* (optional), *drx-ShortCycleTimer* (optional), *drx-HARQ-RTT-TimerDL*, and *drx-HARQ-RTT-TimerUL.* | |

**[Table 12]**

| | |
|---|---|
| | When a DRX cycle is configured, the Active Time for Serving Cells in a DRX group includes the time while: |
| | - *drx-onDurationTimer* or *drx-InactivityTimer* configured for the DRX group is running; or |
| | - *drx-RetransmissionTimerDL* or *drx-RetransmissionTimerUL* is running on any Serving Cell in the DRX group; or |
| | - *ra-ContentionResolutionTimer* (as described in clause 5.1.5) or *msgB-ResponseWindow* (as described in clause 5.1.4a) is running; or |
| | - a Scheduling Request is sent on PUCCH and is pending (as described in clause 5.4.4); or |
| | - a PDCCH indicating a new transmission addressed to the C-RNTI of the MAC entity has not been received after successful reception of a Random Access Response for the Random Access Preamble not selected by the MAC entity among the contention-based Random Access Preamble (as described in clauses 5.1.4 and 5.1.4a). |
| | When DRX is configured, the MAC entity shall: |
| | 1> if a MAC PDU is received in a configured downlink assignment: |
| | 2> start the *drx-HARQ-RTT-TimerDL* for the corresponding HARQ process in the first symbol after the end of the corresponding transmission carrying the DL HARQ feedback; |
| | 2> stop the *drx-RetransmissionTimerDL* for the corresponding HARQ process. |
| | 1> if a MAC PDU is transmitted in a configured uplink grant and LBT failure indication is not received from lower layers: |
| | 2> start the *drx-HARQ-RTT-TimerUL* for the corresponding HARQ process in the first symbol after the end of the first repetition of the corresponding PUSCH transmission; |
| | 2> stop the *drx-RetransmissionTimerUL* for the corresponding HARQ process. |
| | 1> if a *drx-HARQ-RTT-TimerDL* expires: |
| | 2> if the data of the corresponding HARQ process was not successfully decoded: |
| | 3> start the *drx-RetransmissionTimerDL* for the corresponding HARQ process in the first symbol after the expiry of *drx-HARQ-RTT-TimerDL.* |
| | 1> if a *drx-HARQ-RTT-TimerUL* expires: |
| | 2> start the *drx-RetransmissionTimerUL* for the corresponding HARQ process in the first symbol after the expiry of *drx-HARQ-RTT-TimerUL.* |
| | 1> if a DRX Command MAC CE or a Long DRX Command MAC CE is received: |
| | 2> stop *drx-onduration Timer* for each DRX group; |
| | 2> stop *drx-InactivityTimer* for each DRX group. |
| | 1> if *drx-InactivityTimer* for a DRX group expires: |
| | 2> if the Short DRX cycle is configured: |
| | 3> start or restart *drx-ShortCycleTimer* for this DRX group in the first symbol after the expiry of *drx-InactivityTimer,* |
| | 3> use the Short DRX cycle for this DRX group. |
| | 2> else: |
| | 3> use the Long DRX cycle for this DRX group. |
| | 1> if a DRX Command MAC CE is received: |
| | 2> if the Short DRX cycle is configured: |
| | 3> start or restart *drx-ShortCycleTimer* for each DRX group in the first symbol after the end of DRX Command MAC CE reception; |
| | 3> use the Short DRX cycle for each DRX group. |
| | 2> else: |
| | 3> use the Long DRX cycle for each DRX group. |

**[Table 13]**

| |
|---|
| 1> if *dfx-ShortCycleTimer* for a DRX group expires: |
| 2> use the Long DRX cycle for this DRX group. |
| 1> if a Long DRX Command MAC CE is received: |
| 2> stop *drx-ShortCycleTimer* for each DRX group; |
| 2> use the Long DRX cycle for each DRX group. |
| 1> if the Short DRX cycle is used for a DRX group, and [(SFN × 10) + subframe number] modulo (*drx-ShortCycle*) = (*drx-StartOffset*) modulo (*drx-ShortCycle*): |
| 2> start *drx-onDurationTimer* for this DRX group after *drx-SlotOffset* from the beginning of the subframe. |
| 1> if the Long DRX cycle is used for a DRX group, and [(SFN × 10) + subframe number] modulo (*drx-LongCycle*) = *drx-StartOffset* |
| 2> if DCP monitoring is configured for the active DL BWP as specified in TS 38.213 [6], clause 10.3: |
| 3> if DCP indication associated with the current DRX cycle received from lower layer indicated to start *drx-onDurationTimer,* as specified in TS 38.213 [6]; or |
| 3> if all DCP occasion(s) in time domain, as specified in TS 38.213 [6], associated with the current DRX cycle occurred in Active Time considering grants/assignments/DRX Command MAC CE/Long DRX Command MAC CE received and Scheduling Request sent until 4 ms prior to start of the last DCP occasion, or within BWP switching interruption length, or during a measurement gap, or when the MAC entity monitors for a PDCCH transmission on the search space indicated by *recoverySearchSpaceId* of the SpCell identified by the C-RNTI while the *ra-ResponseWindow* is running (as specified in clause 5.1.4); or |
| 3> if *ps-Wakeup* is configured with value *true* and DCP indication associated with the current DRX cycle has not been received from lower layers: |
| 4> start *drx-onDurationTimer* after *drx-SlotOffset* from the beginning of the subframe. |
| 2> else: |
| 3> start *drx-onDurationTimer* for this DRX group after *drx-SlotOffset* from the beginning of the subframe. |
| NOTE 2: In case of unaligned SFN across carriers in a cell group, the SFN of the SpCell is used to calculate the DRX duration. |
| 1> if a DRX group is in Active Time: |
| 2> monitor the PDCCH on the Serving Cells in this DRX group as specified in TS 38.213 [6]; |
| 2> if the PDCCH indicates a DL transmission: |
| 3> start the *drx-HARQ-RTT-TimerDL* for the corresponding HARQ process in the first symbol after the end of the corresponding transmission carrying the DL HARQ feedback; |
| NOTE 3: When HARQ feedback is postponed by PDSCH-to-HARQ_feedback timing indicating a non-numerical k1 value, as specified in TS 38.213 [6], the corresponding transmission opportunity to send the DL HARQ feedback is indicated in a later PDCCH requesting the HARQ-ACK feedback. |
| 3> stop the *drx-RetransmissionTimerDL* for the corresponding HARQ process. |
| 3> if the PDSCH-to-HARQ_feedback timing indicate a non-numerical k1 value as specified in TS 38.213 [6]: |
| 4> start the *drx-RetransmissionTimerDL* in the first symbol after the PDSCH transmission for the corresponding HARQ process. |

**[Table 14]**

| |
|---|
| 2> if the PDCCH indicates a UL transmission: |
| 3> start the *drx-HARQ-RTT-TimerUL* for the corresponding HARQ process in the first symbol after the end of the first repetition of the corresponding PUSCH transmission; |
| 3> stop the *drx-RetransmissionTimerUL* for the corresponding HARQ process. |
| 2> if the PDCCH indicates a new transmission (DL or UL) on a Serving Cell in this DRX group: |
| 3> start or restart *drx-InactivityTimer* for this DRX group in the first symbol after the end of the PDCCH reception. |
| 2> if a HARQ process receives downlink feedback information and acknowledgement is indicated: |
| 3> stop the *drx-RetransmissionTimerUL* for the corresponding HARQ process. |
| 1> if DCP monitoring is configured for the active DL BWP as specified in TS 38.213 [6], clause 10.3; and |
| 1> if the current symbol n occurs within *drx-onDurationTimer* duration; and |
| 1> if *drx-onDurationTimer* associated with the current DRX cycle is not started as specified in this clause: |
| 2> if the MAC entity would not be in Active Time considering grants/assignments/DRX Command MAC CE/Long DRX Command MAC CE received and Scheduling Request sent until 4 ms prior to symbol n when evaluating all DRX Active Time conditions as specified in this clause: |
| 3> not transmit periodic SRS and semi-persistent SRS defined in TS 38.214 [7]; |
| 3> not report semi-persistent CSI configured on PUSCH; |
| 3> if *ps-TransmitPeriodicL1-RSRP* is not configured with value *true*: |
| 4> not report periodic CSI that is L1-RSRP on PUCCH. |
| 3> if *ps-TransmitOtherPeriodicCSI* is not configured with value *true*: |
| 4> not report periodic CSI that is not L1-RSRP on PUCCH. |
| 1> else: |
| 2> in current symbol n, if a DRX group would not be in Active Time considering grants/assignments scheduled on Serving Cell(s) in this DRX group and DRX Command MAC CE/Long DRX Command MAC CE received and Scheduling Request sent until 4 ms prior to symbol n when evaluating all DRX Active Time conditions as specified in this clause: |
| 3> not transmit periodic SRS and semi-persistent SRS defined in TS 38.214 [7] in this DRX group; |
| 3> not report CSI on PUCCH and semi-persistent CSI configured on PUSCH in this DRX group. |
| 2> if CSI masking (*csi-Mask*) is setup by upper layers: |
| 3> in current symbol n, if *drx-onDurationTimer* of a DRX group would not be running considering grants/assignments scheduled on Serving Cell(s) in this DRX group and DRX Command MAC CE/Long DRX Command MAC CE received until 4 ms prior to symbol n when evaluating all DRX Active Time conditions as specified in this clause; and |
| 4> not report CSI on PUCCH in this DRX group. |
| NOTE 4: If a UE multiplexes a CSI configured on PUCCH with other overlapping UCI(s) according to the procedure specified in TS 38.213 [6] clause 9.2.5 and this CSI multiplexed with other UCI(s) would be reported on a PUCCH resource outside DRX Active Time of the DRX group in which this PUCCH is configured, it is up to UE implementation whether to report this CSI multiplexed with other UCI(s). |
| Regardless of whether the MAC entity is monitoring PDCCH or not on the Serving Cells in a DRX group, the MAC entity transmits HARQ feedback, aperiodic CSI on PUSCH, and aperiodic SRS defined in TS 38.214 [7] on the Serving Cells in the DRX group when such is expected. |
| The MAC entity needs not to monitor the PDCCH if it is not a complete PDCCH occasion (e.g. the Active Time starts or ends in the middle of a PDCCH occasion). |

On the other hand, NR V2X in Release 16 did not support power saving operation of UEs, and NR V2X in Release 17 will support power saving operation of UEs (e.g., power saving UEs).

For power saving behavior of a UE (e.g. SL DRX behavior), an SL DRX configuration (SL DRX cycle, SL DRX on-duration, SL DRX off-duration, timers to support SL DRX operation, etc.) to be used by a P-UE (power saving UE) shall be defined, and also an on-duration (an interval during which SL reception/transmission can be performed) / off-duration (an interval during which it operates in sleep mode) shall be defined.

In embodiment(s) of the present disclosure, a method where a receiving UE performs an SL DRX operation by referring to assistance information delivered by a transmitting UE to the peer receiving UE by causing the transmitting UE to deliver assistance information to the peer receiving UE is proposed.

According to one embodiment of the present disclosure (Proposal 1), when a receiving UE receives a PSCCH/PSSCH from a transmitting UE in its SL DRX on-duration, it may extend an SL DRX on-duration by starting an SL DRX inactivity timer (a timer that extends the DRX on-duration or active time by the timer time). For example, a transmitting UE may deliver the PDB value for the TB that it is transmitting to the receiving UE via SCI, PC5 RRC message, or MAC CE to the receiving UE.

And, for example, when a receiving UE receives a PSCCH/PSSCH transmitted by a transmitting UE during its SL DRX on-duration timer interval (or active time interval), it may extend the on-duration interval by (re-)starting its SL DRX inactivity timer (or timer that extends an active time) and monitor a PSCCH/PSSCH transmitted by the transmitting UE.

Here, according to an embodiment of the present disclosure, if an SL HARQ NACK occurs when a receiving UE receives a PSCCH/PSSCH (TB) transmitted by a transmitting UE, the receiving UE may calculate the remaining PDB for the TB in which the NACK occurred and may not (re)start an SL DRX inactivity timer if it determines that the remaining PDB will not be satisfied even if it receives a retransmitted TB by transmitting an SL HARQ NACK to the transmitting UE. And, for example, a receiving UE may transition to SL DRX sleep mode when its SL DRX on-duration timer interval (or active time interval) expires.

Furthermore, for example, if an SL HARQ NACK occurs when a receiving UE receives a PSCCH/PSSCH (TB) transmitted by a transmitting UE, the receiving UE may calculate the remaining PDB for the TB in which the NACK occurred, if it is determined that the remaining PDB will not be satisfied even if it receives a retransmitted TB, it may cause the transmitting UE not to (re)start an SL DRX inactivity timer by transmitting an SL HARQ NACK, and may cause a base station not to further allocate retransmission resources for the transmitting UE's retransmission by transmitting an SL HARQ ACK to the transmitting UE.

For example, if a receiving UE receives a PSCCH/PSSCH from a transmitting UE in its SL DRX on-duration, the receiving UE may extend the SL DRX on-duration by starting an SL DRX inactivity timer. Furthermore, when a receiving UE receives a PSCCH/PSSCH from a transmitting UE and decoding fails, the receiving UE may transmit a PSFCH (SL HARQ NACK) to the transmitting UE and start an SL DRX HARQ RTT timer. Furthermore, for example, when an SL HARQ RTT timer expires, a receiving UE may start the SL DRX retransmission timer and monitor a PSCCH/PSSCH retransmitted by the transmitting UE.

For example, a transmitting UE may deliver to a receiving UE a remaining PDB value for a TB it transmits to the receiving UE via SCI, PC5 RRC message, or (SL DRX command) MAC CE. For example, when a receiving UE receives a PSCCH/PSSCH transmitted by a transmitting UE in its SL DRX on-duration timer interval (or active time interval), it may extend an on-duration interval by (re)starting an SL DRX inactivity timer (or timer that extends an active time) and monitor a PSCCH/PSSCH transmitted by the transmitting UE.

Here, according to an embodiment of the present disclosure, if an SL HARQ NACK occurs when a receiving UE receives a PSCCH/PSSCH (TB) transmitted by a transmitting UE, the receiving UE may check the remaining PDB indicated in the SCI for the TB in which the NACK occurred, and may not (re)start an SL DRX inactivity timer if it determines that the remaining PDB will not be satisfied even if it receives a retransmission TB by transmitting an SL HARQ NACK to the transmitting UE.

And, for example, a receiving UE may transition to SL DRX sleep mode when its SL DRX on-duration timer interval (or active time interval) expires. Further, for example, if an SL HARQ NACK occurs when a receiving UE receives a PSCCH/PSSCH (TB) transmitted by a transmitting UE, the receiving UE may check the remaining PDB indicated in the SCI for the TB in which the NACK occurred and if it is determined that the remaining PDB will not be satisfied even if it receives a retransmission TB by transmitting an SL HARQ NACK to the transmitting UE, the receiving UE may cause a base station to no longer allocate retransmission resources for the retransmission of the transmitting UE by transmitting an SL HARQ ACK to the transmitting UE without (re)starting an SL DRX HARQ RTT timer or an SL DRX retransmission timer.

Furthermore, for example, if an SL DRX timer (e.g., SL DRX inactivity timer, or SL DRX HARQ RTT timer, or SL DRX retransmission timer) is running when a receiving UE determines that the TB received from a transmitting UE does not satisfy the remaining PDB, the receiving UE may stop the running SL DRX timer (e.g., SL DRX inactivity timer, or SL DRX HARQ RTT timer, or SL DRX retransmission timer) and operate in SL sleep mode.

For example, when a transmitting UE has transmitted SL data (unicast/groupcast/broadcast) during an active time interval (SL DRX on-duration timer, or SL DRX inactivity timer, or SL DRX retransmission timer) using a currently allocated SL grant, if it is determined that the remaining PDB is not satisfied, the transmitting UE may cause the receiving UE to terminate the remaining active time (SL DRX on-duration timer, SL DRX inactivity timer, or SL DRX retransmission timer) interval and transition to sleep mode by canceling the SL packet transmission and transmitting an SL DRX command MAC CE to the receiving UE. Then, the receiving UE may wake up in the on-duration of the next SL DRX cycle and monitor a PSCCH/PSSCH.

For example, Proposal 1 may be applied to SL unicast transmissions, groupcast transmissions, or broadcast transmissions between a pair of UEs that have established a PC5 unicast link.

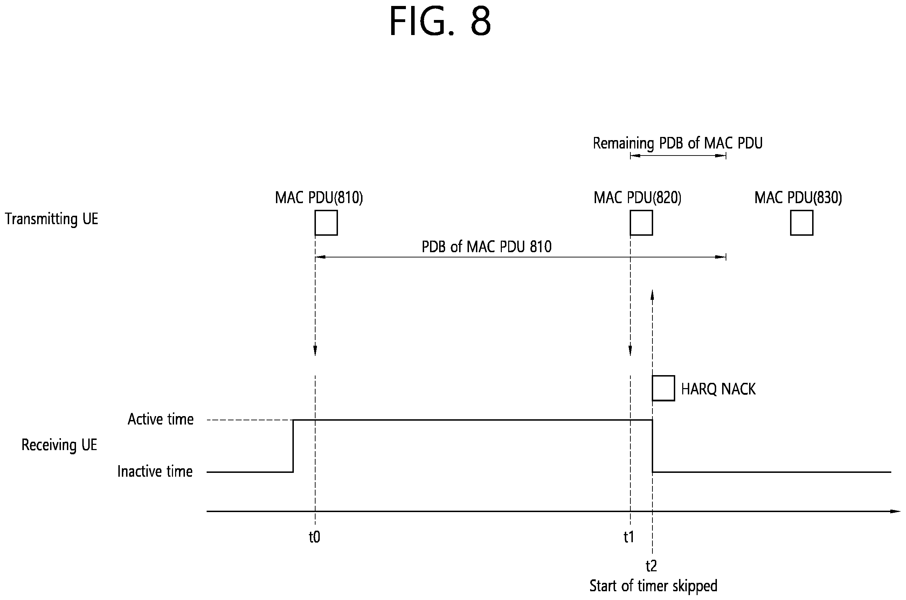

FIG. 8 shows a procedure for a receiving UE to skip the start of an SL DRX timer, according to one embodiment of the present disclosure. The embodiment of FIG. 8 may be combined with various embodiments of the present disclosure.

Referring to FIG. 8, MAC PDU transmissions from a transmitting UE to a receiving UE are shown along a time axis. For example, MAC PDU 810, MAC PDU 820, and MAC PDU 830 may represent MAC PDU transmissions for the same TB, i.e., MAC PDU 820 and MAC PDU 830 may represent retransmissions for MAC PDU 810, for example.

Referring to FIG. 8, at t0, a transmitting UE may transmit a MAC PDU 810 to a receiving UE, within an active time of the receiving UE. For example, at t1, the transmitting UE may transmit a MAC PDU 820 to the receiving UE, within the active time of the receiving UE, wherein said transmitting UE may transmit to the receiving UE, via the SCI related to the MAC PDU 820, information related to the remaining PDB at the time of transmission of the MAC PDU 820 (t1). For example, in this embodiment, it is assumed that a NACK for the MAC PDU 820 has occurred.

Here, for example, the receiving UE may transmit HARQ NACK information for the MAC PDU 820 to the transmitting UE at time point t2. (According to other embodiments, HARQ ACK information may be transmitted instead of HARQ NACK information at time point t2.) Here, the receiving UE may determine, based on the remaining PDB, that if it were to receive the MAC PDU 830 based on the transmission of the HARQ NACK information, the PDB would not be satisfied. For example, based on the determination, the receiving UE may skip (i.e., omit) the start of an SL DRX timer that would have been started based on the transmission of the HARQ NACK information. For example, the SL DRX timer may include at least one of an SL DRX inactivity timer, an SL DRX HARQ RTT timer, and/or an SL DRX retransmission timer.

Subsequently, for example, the receiving UE may transition to an inactive time based on the expiration of the active time. According to one embodiment, the receiving UE may transition to an inactive time at the same time point t2, based on the transmission of the HARQ NACK information.

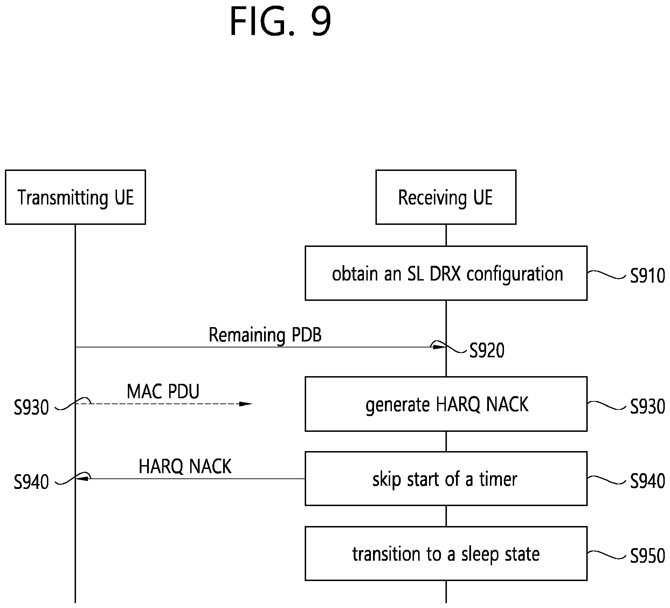

FIG. 9 shows a procedure for a receiving UE to skip the start of an SL DRX timer, according to one embodiment of the present disclosure. The embodiment of FIG. 9 may be combined with various embodiments of the present disclosure.

Referring to FIG. 9, in step S910, a receiving UE may obtain an SL DRX configuration for performing SL communication. In step S920, a transmitting UE may transmit to the receiving UE, information related to the remaining PDB. For example, the information related to the remaining PDB may be transmitted via SCI, MAC CE, PC5 RRC message, or the like. For example, the remaining PDB may be the remaining PDB related to a particular TB at the time point when the information related to the remaining PDB is transmitted. Here, it is assumed that a NACK occurs for the MAC PDU. Based on the occurred NACK, the receiving UE may generate HARQ NACK information to be transmitted to the transmitting UE.

In step S940, the receiving UE may transmit the HARQ NACK information to the transmitting UE. Here, the receiving UE may determine, based on the remaining PDB, that if it receives a retransmission for a MAC PDU based on the transmission of the HARQ NACK information, the PDB will not be satisfied. And, based on the determination, the receiving UE may skip (i.e., omit) the start of an SL DRX timer that would have been started based on the transmission of the HARQ NACK information. For example, the SL DRX timer may include at least one of an SL DRX inactivity timer, an SL DRX HARQ RTT timer, and/or an SL DRX retransmission timer.

In step S950, the receiving UE may transition to an inactive time based on the expiration of the active time.

According to one embodiment of the present disclosure (Proposal 2), when a receiving UE receives a PSCCH/PSSCH from a transmitting UE and fails to decode the PSCCH/PSSCH and transmits an SL HARQ NACK, the receiving UE may operate in SL DRX sleep mode by starting an SL DRX HARQ RTT timer. Furthermore, for example, a receiving UE may transition to an active mode by starting an SL DRX retransmission timer when the SL DRX HARQ RTT timer expires, and monitor a retransmission TB transmitted by the transmitting UE.

For example, an SL DRX HARQ RTT timer may be a timer that causes a receiving UE to assume that a retransmission packet from a transmitting UE will not come before that timer expires and to operate in SL sleep mode until that timer expires. For example, an SL DRX retransmission timer may represent the maximum time that a receiving UE waits for a retransmission TB after determining that the transmitting UE will transmit a retransmission TB. For example, a receiving UE may monitor for a retransmission TB during that timer time.

For example, a transmitting UE may deliver the PDB value for a TB it transmits to a receiving UE via SCI, PC5 RRC message, or (SL DRX command) MAC CE to the receiving UE. For example, when a receiving UE receives a PSCCH/PSSCH from a transmitting UE, it may calculate the remaining PDB of the TB in which NACK occurred immediately before transmitting the SL HARQ NACK by failing to decode the PSCCH/PSSCH. Here, for example, a receiving UE may determine whether the remaining PDB will be exceeded when receiving the next retransmission TB by transmitting an SL HARQ NACK to a transmitting UE, and if the receiving UE determines that the remaining PDB will not be satisfied, the receiving UE may transmit an SL HARQ ACK to the transmitting UE instead of an SL HARQ NACK, and may not start an SL DRX HARQ RTT timer and an SL DRX retransmission timer.

For example, if a receiving UE was operating in an active time (time to monitor a PSCCH/PSSCH of a transmitting UE) within an off-duration (interval where it may operate in SL sleep mode) of an SL DRX cycle and was performing an operation of receiving a retransmission TB (receiving a retransmission TB and transmitting SL HARQ feedback), immediately before transmitting an SL HARQ NACK by failing to decode the PSCCH/PSSCH, if the receiving UE calculates the remaining PDB of the TB in which NACK occurred and determines that the PDB will not be satisfied even if it receives the next retransmission TB by transmitting an SL HARQ NACK to the transmitting UE because it will exceed the remaining PDB, it may immediately operate in SL DRX sleep mode without starting an SL DRX HARQ RTT timer and SL DRX retransmission timer. Alternatively, for example, a receiving UE may transmit an SL HARQ ACK to a transmitting UE to ensure that the transmitting UE does not transmit any more retransmission packets in this case.

For example, proposal 2 may be applied to SL unicast transmissions or groupcast/broadcast transmissions between a pair of UEs that have established a PC5 unicast link.

Proposal 3. When a receiving UE receives a PSCCH/PSSCH from a transmitting UE within its SL DRX on-duration, the receiving UE may extend the SL DRX on-duration by starting an SL DRX inactivity timer. For example, a transmitting UE may deliver to a receiving UE a last (re)transmission indication(that is, an indication to the receiving UE that this is the last transmission of the current TB) for the TB it transmits to the receiving UE via SCI, or a PC5 RRC message, or a (SL DRX command) MAC CE. When a receiving UE receives a PSCCH/PSSCH transmitted by a transmitting UE within its SL DRX on-duration timer interval (or active time interval), the receiving UE may extend the on-duration interval by (re)starting an SL DRX inactivity timer (or timer that extends the active time) and monitor a PSCCH/PSSCH transmitted by the transmitting UE.

Here, according to an embodiment of the present disclosure, if an SL HARQ NACK has occurred when a receiving UE receives the last PSCCH/PSSCH transmitted by a transmitting UE, the receiving UE may not (re)start an SL DRX inactivity timer. And, for example, a receiving UE may transition to SL DRX sleep mode when its SL DRX on-duration timer interval (or active time interval) expires. Alternatively, for example, a transmitting UE may, when transmitting the last PSCCH/PSSCH for the TB that it transmits, deliver a "Go-To-Sleep indication (indication to operate in SL sleep mode)" to a receiving UE via a SCI/MAC CE/PC5 RRC message instead of a "last (re)transmission indication" to allow the receiving UE to operate in SL sleep mode without (re)starting an SL DRX inactivity timer. For example, a receiving UE may infer from the "last (re)transmission indication" indicated in SCI that the transmission related to that SCI is the last transmission.

For example, a transmitting UE may deliver its last (re)transmission indication to a receiving UE via SCI, PC5 RRC message, or (SL DRX command) MAC CE if the TB it transmits to the receiving UE is the last TB in the transmission buffer of the transmitting UE. A receiving UE may stop the current active time (SL DRX on-duration timer, SL DRX inactivity timer, SL DRX retransmission timer) and transition to sleep mode when it receives SCI/PC5 RRC message/SL DRX command MAC CE including the last (re)transmission indication that the transmitting UE transmits. Then, a receiving UE may wake up at the start of the next SL DRX cycle or the on-duration timer of the SL DRX cycle and perform PSCCH/PSSCH monitoring.

For example, a transmitting UE may deliver a last (re)transmission indication to a receiving UE via SCI, or PC5 RRC message, or (SL DRX command) MAC CE, if the transmission it performs to a receiving UE is the last transmission for the current TB. A receiving UE may stop its current active time and transition to sleep mode when it receives SCI/PC5 RRC message/SL DRX command MAC CE including the last (re)transmission indication transmitted by a transmitting UE. Then, a receiving UE may wake up at the start of the next SL DRX cycle or the on-duration timer of the SL DRX cycle and perform PSCCH/PSSCH monitoring.

For example, a transmitting UE may also cause a receiving UE to stop its current active time and transition to sleep mode by delivering SCI, or a PC5 RRC message, or (SL DRX command) a MAC CE to the receiving UE, if the following conditions are met (or detected) Then, a receiving UE may wake up at the start of the next SL DRX cycle or the on-duration timer of the SL DRX cycle and perform PSCCH/PSSCH monitoring.
- When a security check failure (or, integrity check failure) is detected
- When an SL-SRB1 integrity check failure is detected
- When a PC5 RRC reconfiguration failure is detected
- When a negotiation failure for an SL DRX configuration is detected
- When an SL specific MAC reset is triggered
- When performing a handover to a target cell is triggered, or when a handover command is received from a target cell, a transmitting UE may transmit an SL DRX command MAC CE to a receiving UE to stop an SL DRX configuration (e.g. SL DRX cycle, SL DRX on-duration timer) received from a serving cell.

For example, in an SL unicast, when a transmitting UE transmits an SL DRX command to a receiving UE to stop the current active time and transition to sleep mode, it may include and transmit, the PC5 link identifier or L2 source ID and L2 destination ID in the SL DRX command MAC CE/SCI/PC5 RRC message to allow the receiving UE to stop the active time of a specific unicast only.

For example, in SL groupcast/broadcast, when a transmitting UE causes a receiving UE to stop the current active time and transition to sleep mode by transmitting SL DRX command to a receiving UE, it may include and transmit in the SL DRX command MAC CE/SCI/PC5 RRC message, the L2 destination ID, PQI to enable the receiving UE to stop an active time of the specific groupcast/broadcast only.

For example, proposal 3 may be applied to SL unicast transmissions, groupcast transmissions, or broadcast transmissions between a pair of UEs that have established a PC5 unicast link.

In addition, for example, SCI including the last transmission indication may also include the following information.

### - SL service indication

When a transmitting UE delivers a last transmission indication via SCI to ensure that the other UE (the UE receiving the SCI including the last transmission indication) stops or does not start an SL DRX timer (e.g., SL DRX on-duration timer, or SL DRX inactivity timer, or SL DRX HARQ RTT timer, or SL DRX retransmission timer), in order to ensure that the receiving UE only stops the SL DRX timer related to a specific SL service, it may indicate "PQI (PC5 5QI) linked to an SL service, or, PFI (PC5 QoS flow identifier) linked to an SL service, or, SL priority linked to an SL service" together.

### - Interval of sleep mode ("time to operate in SL sleep mode")

A transmitting UE may deliver a "sleep mode interval" together when it delivers its last transmission indication via SCI to ensure that the other UE stops or does not start an SL DRX timer. For example, when a receiving UE operates in sleep mode by stopping or without starting an SL DRX timer, the receiving UE may operate in SL sleep mode for the duration of the "sleep mode interval" indicated in the SCI.

Furthermore, for example, the last transmission indication via SCI may be indicated per PC5 unicast link (or PC5 RRC connection, or source/destination pair). That is, the "specific PC5 unicast link identifier (or L1 source layer ID, L1 destination layer ID, cast type information to distinguish between unicast links)" information may be indicated together so that the receiving UE can stop or not to start an SL DRX timer linked to a specific PC5 unicast link only.

Furthermore, for example, a last transmission indication over SCI may be indicated per destination. That is, "L1 Destination Layer ID information" may be indicated along with it so that a receiving UE may stop or may not start only the SL DRX timer related to a specific destination.

Furthermore, for example, a last transmission indication via SCI may be indicated per HARQ process ID or per SL process. That is, the "HARQ process ID, SL process ID" information may be indicated together to ensure that a receiving UE may stop or not start only the SL DRX timer linked to a specific HARQ process or a specific SL process.

Furthermore, for example, a last transmission indication may be explicitly indicated via an SCI, but a method is proposed where a UE receiving SCI may implicitly infer that it has received the last transmission in the following way. That is, for example, when a UE that has received SCI checks transmission resource information indicated in the SCI which a transmitting UE reserves and when only resources for the current PSSCH are reserved and indicated, it considers the PSSCH linked to the corresponding SCI to be the last transmission, and operates as an SL sleep mode by stopping or without starting (if an SL DRX timer is not started) the currently running SL DRX timer. For example, the proposed method may be limitedly applied to a single HARQ process, or to a single SL process.

For example, according to the prior art, up to two or three transmission resources can be reserved in an SCI. That is, according to the present embodiment, if only resources for the current PSSCH are reserved and indicated in SCI, a receiving UE may receive that SCI and consider it as a reception for the last transmission.

According to one embodiment of the present disclosure (Proposal 4), when a receiving UE receives a PSCCH/PSSCH from a transmitting UE, if the receiving UE fails to decode the PSCCH/PSSCH and transmits SL HARQ NACK, the receiving UE may start an SL DRX HARQ RTT timer and operate in SL DRX sleep mode. In addition, when an SL DRX HARQ RTT timer expires, a receiving UE may transition to active mode, start an SL DRX retransmission timer and monitor retransmission TBs transmitted by a transmitting UE.

For example, a transmitting UE may deliver a "last (re)transmission indication" to a receiving UE via SCI, PC5 RRC message, or MAC CE that indicates to the receiving UE that the TB it transmits is the last transmission. When a receiving UE receives a PSCCH/PSSCH from a transmitting UE, it may not start an SL DRX HARQ RTT timer and an SL DRX retransmission timer if it is indicated ("last (re)transmission indication") via PSCCH (SCI) that the corresponding PSSCH (TB) is the last transmission, even if it fails to decode the PSCCH/PSSCH and an SL HARQ NACK occurs.

When a receiving UE is performing an operation of receiving a retransmission TB (receiving a retransmission TB and transmitting SL HARQ feedback) while operating in an active time in an off-duration of an SL DRX cycle, if it receives an indication from a transmitting UE via PSCCH that the corresponding PSSCH transmission is the last transmission, it may immediately operate in SL DRX sleep mode without starting an SL DRX HARQ RTT timer and an SL DRX retransmission timer. Alternatively, for example, a transmitting UE may, when transmitting the last PSCCH/PSSCH for the TB it transmits, deliver a "Go-To-Sleep indication" to a receiving UE via a SCI/MAC CE/PC5 RRC message instead of a "last (re)transmission indication" to allow the receiving UE to operate in SL sleep mode without (re)starting an SL DRX HARQ RTT timer/SL DRX retransmission timer.

For example, proposal 4 may be applied to SL unicast transmissions or groupcast transmissions between a pair of UEs that have established a PC5 unicast link.

In addition, for example, SCI including the last transmission indication may also include the following information.

### - SL service indication

When a transmitting UE delivers a last transmission indication via SCI to ensure that the other UE (the UE receiving the SCI including the last transmission indication) stops or does not start an SL DRX timer (e.g., SL DRX on-duration timer, or SL DRX inactivity timer, or SL DRX HARQ RTT timer, or SL DRX retransmission timer), it may indicate the "PQI (PC5 5QI) linked to an SL service, or, PFI (PC5 QoS flow identifier) linked to an SL service, or, SL priority linked to an SL service" together so that the receiving UE can only stop the SL DRX timer linked to a specific SL service.

### - Interval of sleep mode (time to operate in SL sleep mode)

A transmitting UE may deliver a "interval of sleep mode" together when it delivers its last transmission indication via SCI to ensure that the other UE stops or does not start an SL DRX timer. For example, when a receiving UE operates in sleep mode by stopping or without starting an SL DRX timer, the receiving UE may operate in SL sleep mode for the duration of the "interval of sleep mode" indicated in the SCI.

Furthermore, for example, a last transmission indication via SCI may be indicated per PC5 unicast link (or PC5 RRC connection, or source/destination pair). That is, the "specific PC5 unicast link identifier (or L1 source layer ID, L1 destination layer ID, cast type information to distinguish between unicast links)" information may be indicated together so that a receiving UE may stop or may not start only an SL DRX timer linked to a specific PC5 unicast link.

Furthermore, for example, a last transmission indication via SCI may be indicated per destination. That is, "L1 Destination Layer ID information" may be indicated along with it so that a receiving UE may stop or may not start an SL DRX timer linked to a specific destination only.

Furthermore, for example, a last transmission indication via SCI may be indicated per HARQ process ID or per SL process. That is, the "HARQ process ID, SL process ID" information may be indicated together so that a receiving UE may stop or may not start an SL DRX timer linked to a specific HARQ process or a specific SL process only.

Furthermore, for example, a last transmission indication may be explicitly indicated via SCI, but a method is proposed where a UE receiving the SCI may implicitly infer that it has received the last transmission in the following way. That is, for example, a method is proposed where if a UE receiving SCI checks the transmission resource information reserved by a transmitting UE, indicated in the SCI, and only resources for the current PSSCH are reserved and indicated, it considers the PSSCH linked to the corresponding SCI to be the last transmission, and operates in SL sleep mode by stopping or without starting (if an SL DRX timer is not started) the currently running SL DRX timer. For example, the proposed method may be limitedly applied to a single HARQ process, or a single SL process.

According to one embodiment of the present disclosure (Proposal 5), when a receiving UE receives a PSCCH/PSSCH from a transmitting UE within its SL DRX on-duration, the receiving UE may extend the SL DRX on-duration by starting an SL DRX inactivity timer. When a transmitting UE flushes the HARQ buffer for an ongoing SL transmission TB due to any of the following reasons, the transmitting UE may deliver a HARQ buffer flush instruction (or Go-To-Sleep instruction) to a receiving UE to inform the receiving UE that the transmitting UE has flushed the HARQ buffer and that there will be no further transmission (e.g., retransmission) for the ongoing SL TB.

### Cases when a HARQ buffer for an SL TB is flushed

- When transmitting a TB with the current SL grant, if the remaining PDB is not satisfied, the MAC layer entity may flush the HARQ buffer for that TB.
- If the transmission of a TB in transit is the last transmission, after the last (re)transmission (or after receiving HARQ feedback for the last transmission), the MAC layer may flush the HARQ buffer for that TB.

For example, the last transmission may mean, for example, the case when, in transmission resource allocation mode 1, the maximum number of allowed transmissions for the TB has been reached. Alternatively, the last transmission may mean, for example, in transmission resource allocation mode 2, that 1) for a unicast transmission operating with HARQ feedback enabled, a case where a transmitting UE has received a HARQ ACK for a PSCCH/PSSCH it has transmitted to a receiving UE. Alternatively, the last transmission may mean, for example, in transmission resource allocation mode 2, 2) for a groupcast transmission operating in HARQ feedback enabled (NACK-only mode: no HARQ feedback is reported to the transmitting UE in case of ACK, and a NACK is reported to the transmitting UE only in case of NACK), a case where the transmitting UE does not receive a HARQ feedback from the receiving UE for a PSCCH/PSSCH it has transmitted to the receiving UE. In other words, the transmitting UE may determine that it is an ACK.
- If there are no MAC PDUs to transmit using the configured SL grant (no MAC PDUs have been obtained to transmit), the MAC layer may flush the HARQ buffer for that TB.
- When the case of Uu MAC reset, the HARQ buffer for an SL TB that is being transmitted (or retransmitted) using resources allocated in transmission resource allocation mode 1 may be flushed only. For example, this may not be applied for transmission resource allocation mode 2.
- A case of SL specific MAC reset

A receiving UE may not (re)start an SL DRX inactivity timer if it receives a "HARQ buffer flush indication" from a transmitting UE. And, for example, a receiving UE may transition to SL DRX sleep mode upon expiration of its SL DRX on-duration timer interval (or, active time interval). Alternatively, for example, a transmitting UE may cause a receiving UE to operate in SL sleep mode without (re)starting an SL DRX inactivity timer by delivering a "Go-To-Sleep instruction" to the receiving UE via a SCI/MAC CE/PC5 RRC message instead of a "HARQ buffer flush indication" when it has flushed its HARQ buffer.

For example, proposal 5 may be applied to SL unicast transmissions, groupcast transmissions, or broadcast transmissions between a pair of UEs that have established a PC5 unicast link.

In addition, for example, SCI including a "HARQ buffer flush indication (or, Go-To-Sleep indication)" may also include the following information.

### - SL service indication

When a transmitting UE delivers a "HARQ buffer flush indication (or, Go-To-Sleep indication) via SCI so that the other UE(a UE receiving SCI including "HARQ buffer flush indication (or, Go-To-Sleep indication)") may stop or may not start an SL DRX timer (e.g., SL DRX on-duration timer, or, an SL DRX inactivity timer, or, an SL DRX HARQ RTT timer, or an SL DRX retransmission timer), the transmitting UE may indicate "SL service (e.g., PQI (PC5 5QI) linked to an SL service, or, PFI (PC5 QoS flow identifier) linked to an SL service, or, SL priority linked to an SL service" together so that the receiving UE may only stop the SL DRX timer linked to a specific SL service.

### - Interval of sleep mode ("time to operate in SL sleep mode")

A transmitting UE may deliver an "interval of sleep mode" together when it delivers "HARQ buffer flush indication (or, Go-To-Sleep indication)" via SCI to ensure that the other UE stops or does not start an SL DRX timer. For example, when a receiving UE operates in sleep mode by stopping or without starting an SL DRX timer, the receiving UE may operate in SL sleep mode for the duration of the " interval of sleep mode " indicated in the SCI.

Furthermore, for example, "HARQ buffer flush indication (or, Go-To-Sleep indication)" via SCI may be indicated per PC5 unicast link (or PC5 RRC connection, or source/destination pair). That is, the "specific PC5 unicast link identifier (or L1 source layer ID, L1 destination layer ID, cast type information to distinguish between unicast links)" information may be indicated together so that the receiving UE can stop or not to start an SL DRX timer linked to a specific PC5 unicast link only.

Furthermore, for example, a "HARQ buffer flush indication (or, Go-To-Sleep indication)" over SCI may be indicated per destination. That is, "L1 Destination Layer ID information" may be indicated along with it so that a receiving UE may stop or may not start only the SL DRX timer related to a specific destination.

Furthermore, for example, a "HARQ buffer flush indication (or, Go-To-Sleep indication)" via SCI may be indicated per HARQ process ID or per SL process. That is, the "HARQ process ID, SL process ID" information may be indicated together to ensure that a receiving UE may stop or not start only the SL DRX timer linked to a specific HARQ process or a specific SL process.

Furthermore, for example, a "HARQ buffer flush indication (or, Go-To-Sleep indication)" may be explicitly indicated via an SCI, but a method is proposed where a UE receiving SCI may implicitly infer that it has received the last transmission in the following way. That is, for example, when a UE that has received SCI checks transmission resource information indicated in the SCI which a transmitting UE reserves and when only resources for the current PSSCH are reserved and indicated, it considers the PSSCH linked to the corresponding SCI to be the last transmission, and also considers the transmitting UE(the UE which has transmitted the SCI) has flushed the HARQ buffer for the corresponding HARQ processor, SL process), and operates as an SL sleep mode by stopping or without starting (if an SL DRX timer is not started) the currently running SL DRX timer. For example, the proposed method may be limitedly applied to a single HARQ process, or to a single SL process.

According to one embodiment of the present disclosure (Proposal 6), when a receiving UE receives a PSCCH/PSSCH from a transmitting UE, if the receiving UE fails to decode the PSCCH/PSSCH and transmits SL HARQ NACK, the receiving UE may start an SL DRX HARQ RTT timer and operate in SL DRX sleep mode. In addition, when an SL DRX HARQ RTT timer expires, a receiving UE may transition to active mode, start an SL DRX retransmission timer and monitor retransmission TBs transmitted by a transmitting UE.

For example, if a transmitting UE has flushed a HARQ buffer for an ongoing SL transmission TB because of the following reasons, it may inform a receiving UE that the transmitting UE has flushed the HARQ buffer and that there will be no further transmission (e.g., retransmission) for the ongoing SL TB by delivering a HARQ buffer flush instruction to the receiving UE.

### Cases when a HARQ buffer for an SL TB is flushed

- When transmitting a TB with the current SL grant, if the remaining PDB is not satisfied, the MAC layer entity may flush the HARQ buffer for that TB.
- If the transmission of a TB in transit is the last transmission, after the last (re)transmission (or after receiving HARQ feedback for the last transmission), the MAC layer may flush the HARQ buffer for that TB.

For example, the last transmission may mean, for example, the case when, in transmission resource allocation mode 1, the maximum number of allowed transmissions for the TB has been reached. Alternatively, the last transmission may mean, for example, in transmission resource allocation mode 2, that 1) for a unicast transmission operating with HARQ feedback enabled, a case where a transmitting UE has received a HARQ ACK for a PSCCH/PSSCH it has transmitted to a receiving UE. Alternatively, the last transmission may mean, for example, in transmission resource allocation mode 2, 2) for a groupcast transmission operating in HARQ feedback enabled (NACK-only mode: no HARQ feedback is reported to the transmitting UE in case of ACK, and a NACK is reported to the transmitting UE only in case of NACK), a case where the transmitting UE does not receive a HARQ feedback from the receiving UE for a PSCCH/PSSCH it has transmitted to the receiving UE. In other words, the transmitting UE may determine that it is an ACK.
- If there are no MAC PDUs to transmit using the configured SL grant (no MAC PDUs have been obtained to transmit), the MAC layer may flush the HARQ buffer for that TB.
- When the case of Uu MAC reset, the HARQ buffer for an SL TB that is being transmitted (or retransmitted) using resources allocated in transmission resource allocation mode 1 may be flushed only. For example, this may not be applied for transmission resource allocation mode 2.
- A case of SL specific MAC reset

When a receiving UE receives a "HARQ buffer flush indication" from a transmitting UE, it may not start an SL DRX HARQ RTT timer and an SL DRX retransmission timer. If a receiving UE receives a "HARQ buffer flush indication" from a transmitting UE when it is operating in an active time in an off-duration of an SL DRX cycle, it may immediately operate in SL DRX sleep mode without starting an SL DRX HARQ RTT timer and an SL DRX retransmission timer. Alternatively, a transmitting UE may, for example, deliver a "Go-To-Sleep indication" to a receiving UE via SCI/MAC CE/PC5 RRC message instead of a "HARQ buffer flush indication" when it has flushed the HARQ buffer, allowing the receiving UE to operate in SL sleep mode without (re)starting an SL DRX HARQ RTT timer/SL DRX retransmission timer.

For example, proposal 6 may be applied to SL unicast transmissions or groupcast transmissions between a pair of UEs that have established a PC5 unicast link.

In addition, for example, SCI including a "HARQ buffer flush indication (or, Go-To-Sleep indication)" may also include the following information.

### - SL service indication

When a transmitting UE delivers a "HARQ buffer flush indication (or, Go-To-Sleep indication) via SCI so that the other UE(a UE receiving SCI including a last transmission indication) may stop or may not start an SL DRX timer (e.g., SL DRX on-duration timer, or, an SL DRX inactivity timer, or, an SL DRX HARQ RTT timer, or an SL DRX retransmission timer), the transmitting UE may indicate "SL service (e.g., PQI (PC5 5QI) linked to an SL service, or, PFI (PC5 QoS flow identifier) linked to an SL service, or, SL priority linked to an SL service" together so that the receiving UE may only stop the SL DRX timer linked to a specific SL service.

### - Interval of sleep mode (time to operate in SL sleep mode)

A transmitting UE may deliver an "interval of sleep mode" together when it delivers "HARQ buffer flush indication (or, Go-To-Sleep indication)" via SCI to ensure that the other UE (a UE receiving SCI including "HARQ buffer flush indication (or, Go-To-Sleep indication)") stops or does not start an SL DRX timer. For example, when a receiving UE operates in sleep mode by stopping or without starting an SL DRX timer, the receiving UE may operate in SL sleep mode for the duration of the " interval of sleep mode " indicated in the SCI.

Furthermore, for example, "HARQ buffer flush indication (or, Go-To-Sleep indication)" via SCI may be indicated per PC5 unicast link (or PC5 RRC connection, or source/destination pair). That is, the "specific PC5 unicast link identifier (or L1 source layer ID, L1 destination layer ID, cast type information to distinguish between unicast links)" information may be indicated together so that the receiving UE may stop or may not start an SL DRX timer linked to a specific PC5 unicast link only.

Furthermore, for example, a "HARQ buffer flush indication (or, Go-To-Sleep indication)" over SCI may be indicated per destination. That is, "L1 Destination Layer ID information" may be indicated along with it so that only the SL DRX timer related to a specific destination may be stopped or may not be started.

Furthermore, for example, a "HARQ buffer flush indication (or, Go-To-Sleep indication)" via SCI may be indicated per HARQ process ID or per SL process. That is, the "HARQ process ID, SL process ID" information may be indicated together to ensure that a receiving UE may stop or not start only the SL DRX timer linked to a specific HARQ process or a specific SL process.

Furthermore, for example, a "HARQ buffer flush indication (or, Go-To-Sleep indication)" may be explicitly indicated via an SCI, but a method is proposed where a UE receiving SCI may implicitly infer that a transmitting UE has flushed a HARQ buffer in the following way. That is, for example, when a UE that has received SCI checks transmission resource information indicated in the SCI which a transmitting UE reserves and when only resources for the current PSSCH are reserved and indicated, it considers the PSSCH linked to the corresponding SCI to be the last transmission, and also considers the transmitting UE (the UE which has transmitted the SCI) has flushed the HARQ buffer for the corresponding HARQ process (or, SL process), and operates as an SL sleep mode by stopping or without starting (if an SL DRX timer is not started) the currently running SL DRX timer. For example, the proposed method may be limitedly applied to a single HARQ process, or to a single SL process.

According to one embodiment of the present disclosure (Proposal 7), when a HARQ feedback mode for SL communications is set to "disabled", if the MAC layer of a transmitting UE determines that the next retransmission of the MAC PDU is no longer required, the MAC layer may instruct the physical layer to transmit a PUCCH (i.e., SL HARQ ACK) to a base station (to ensure that the base station no longer allocates retransmission resources) by indicating a positive acknowledgment (ACK) to the physical layer.

Furthermore, for example, if the MAC layer of a transmitting UE has determined that the next retransmission of the MAC PDU is no longer required and has delivered (or is about to deliver) a PUCCH to a base station indicating an ACK (i.e., an SL HARQ ACK), the transmitting UE may cause a receiving UE not to (re)start an SL DRX timer (e.g., SL DRX inactivity timer, SL DRX HARQ RTT timer, SL HARQ retransmission timer) by delivering an instruction ("SL Go-To-Sleep instruction" or "No-Start-SL-DRX-Timer instruction: SL DRX Inactivity Timer, SL DRX HARQ RTT Timer, SL HARQ Retransmission Timer"). For example, the instruction may be delivered by a UE (e.g., the transmitting UE) to the other UE (e.g., the receiving UE) via SCI, or MAC CE, or PC5 RRC message.

For example, a receiving UE may operate in SL sleep mode without starting an SL DRX timer upon receiving an indication ("SL Go-To-Sleep indication" or "No-Start-SL-DRX-Timer indication") from a transmitting UE. For example, if an interval in which a receiving UE receives the indication from a transmitting UE is an SL DRX on-duration interval, the receiving UE may operate in SL DRX sleep mode when the on-duration timer expires. If, for example, a receiving UE receives the indication from a transmitting UE while the SL DRX inactivity timer or the SL DRX retransmission timer is running, the receiving UE may stop the SL DRX inactivity timer or the SL DRX retransmission timer and operate in SL sleep mode.

In addition, for example, SCI including the indications proposed in Proposal 7 ("SL Go-To-Sleep indication" or "No-Start-SL-DRX-Timer indication") may also include the following information.

### - SL service indication

When a transmitting UE delivers a "SL Go-To-Sleep indication" or "No-Start-SL-DRX-Timer indication: SL DRX inactivity timer, SL DRX HARQ RTT timer, SL HARQ retransmission timer") via SCI so that the other UE(a UE receiving SCI including "SL Go-To-Sleep indication" or "No-Start-SL-DRX-Timer indication: SL DRX inactivity timer, SL DRX HARQ RTT timer, SL HARQ retransmission timer") may stop or may not start an SL DRX timer (e.g., SL DRX on-duration timer, or, an SL DRX inactivity timer, or, an SL DRX HARQ RTT timer, or an SL DRX retransmission timer), the transmitting UE may indicate "SL service (e.g., PQI (PC5 5QI) linked to an SL service, or, PFI (PC5 QoS flow identifier) linked to an SL service, or, SL priority linked to an SL service" together so that the receiving UE may only stop the SL DRX timer linked to a specific SL service.

### - Interval of sleep mode (time to operate in SL sleep mode)

A transmitting UE may deliver "an interval of sleep mode" together when it transmits an "SL Go-To-Sleep indication" or "No-Start-SL-DRX-Timer indication" via SCI to prevent the other UE from stopping or starting an SL DRX timer. For example, when a receiving UE operates in sleep mode without stopping or starting an SL DRX timer, the receiving UE may operate in the SL sleep mode state during the "interval of sleep mode" indicated in the SCI.

Furthermore, for example, an "SL Go-To-Sleep indication" or a "No-Start-SL-DRX-Timer indication" via SCI may be indicated per PC5 unicast link (or PC5 RRC connection, or source/destination pair). That is, a "specific PC5 unicast link identifier (or L1 source layer ID, L1 destination layer ID, cast type information to distinguish between unicast links)" information may be indicated together to ensure that the receiving UE stops or does not start only an SL DRX timer linked to a specific PC5 unicast link.

In addition, for example, an "SL Go-To-Sleep indication" or a "No-Start-SL-DRX-Timer indication" via SCI may be indicated per destination. That is, L1 destination layer ID information may be indicated together to ensure that a receiving UE stops or does not start only the SL DRX timer linked to a specific destination.

In addition, for example, "SL Go-To-Sleep indication" or the "No-Start-SL-DRX-Timer indication: SL DRX Inactivity Timer, SL DRX HARQ RTT Timer, SL HARQ Retransmission Timer" via SCI may be indicated per HARQ process ID or per SL process, i.e., the "HARQ process ID, SL process ID" information may be indicated together to ensure that a receiving UE stops or does not start only the SL DRX timer related to the specific HARQ process or the specific SL process.

Furthermore, for example, the "SL Go-To-Sleep indication" or the "No-Start-SL-DRX-Timer indication" may be explicitly indicated via SCI, but it is proposed that a UE receiving the SCI by other means may implicitly infer that a transmitting UE no longer has SL data to deliver to it as follows. That is, for example, a method for a UE that has received SCI to stop or not to start (when an SL DRX timer is not started) and to operate as SL sleep mode, by causing the UE that has received the SCI to check the transmission resource information which a transmitting UE reserved, and if only resources for the current PSSCH are reserved, to consider the PSSCH linked to the corresponding SCI to be the last transmission and to consider that the transmitting UE (the UE that has transmitted the SCI) has flushed the HARQ buffer for the corresponding HARQ process (or, SL process), is proposed. For example, the proposed meethod may be applied limitedly for a single HARQ process, or a single SL process.

An SL DRX configuration referred to in the present disclosure may include at least one of the following parameters

**[Table 15]**

| | • Sidelink DRX configurations |
|---|---|
| ✔ *SL drx-onDurationTimer: the duration at the beginning of a SL DRX Cycle;* | |
| ✔ *SL drx-slotOffset: the delay before starting the sl drx-onDurationTimer;* | |
| ✔ *SL drx-InactivityTimer: the duration after the PSCCH occasion in which a PSCCH indicates a new SL transmission for the MAC entity;* | |
| ✔ *SL drx-RetransmissionTimer (per HARQ process): the maximum duration until a retransmission is received;* | |
| ✔ *SL drx-LongCycleStartOffset: the Long DRX cycle and drx-StartOffset which defines the subframe where the Long and Shor DRX Cycle starts;* | |
| ✔ *SL drx-shortCycle (optional): the Short DRX cycle;* | |
| ✔ *SL drx-shortCycleTimer (optional): the duration the UE shall follow the Shor DRX cycle; SL drx-HARQ-RTT-Timer (per HARQ process): the minimum duration before an assignment for HARQ retransmission is expected by the MAC entity.* | |

The following SL DRX timers mentioned in this disclosure may be used for the following purposes.

SL DRX on-duration timer: Indicates the period of time during which a UE performing SL DRX operation should operate as the default active time to receive PSCCH/PSSCH from other UE.

SL DRX inactivity timer: may represent an interval that extends an SL DRX on-duration interval, which is an interval during which a UE performing SL DRX operation must operate as active time by default to receive PSCCH/PSSCH from other UE. That is, an SL DRX on-duration timer may be extended by the SL DRX inactivity timer interval. Furthermore, when a UE receives a PSCCH for a new TB (first SCI and/or second SCI) or a new packet (new PSSCH transmission) from other UE, the UE may extend the SL DRX on-duration timer by starting an SL DRX inactivity timer.

SL DRX HARQ RTT timer: may indicate an interval during which a UE performing SL DRX operation may operate in sleep mode until it receives a retransmission packet (or PSSCH assignment) from other UE. That is, if a UE starts the SL DRX HARQ RTT timer, the UE may determine that other UE will not transmit a sidelink retransmission packet to it until the SL DRX HARQ RTT timer expires and may operate in sleep mode during that timer. Or, the UE may not perform monitoring of an SL channel/signal which the counterpart UE transmits, until the expiration of an SL DRX HARQ RTT timer.

SL DRX retransmission timer: may indicate an interval of time during which a UE performing SL DRX operation is active time to receive retransmission packets (or PSSCH assignments) transmitted by other UE. For example, when an SL DRX HARQ RTT timer expires, an SL DRX retransmission timer may start. During this timer period, a UE may monitor a reception of retransmission sidelink packets (or PSSCH allocations) transmitted by other UE.

In addition, in the following description, the names of the timers (SL DRX On-Duration Timer, SL DRX Inactivity timer, SL HARQ RTT Timer, SL DRX Retransmission Timer, etc.) are exemplary, and timers that perform the same/similar functions based on what is described in each timer can be considered the same/similar timer regardless of the name.

The proposals in this disclosure may be extended to parameters (and timers) included in default/common SL DRX configurations or default/common SL DRX patterns or default/common SL DRX configurations, as well as parameters (and timers) included in UE pair specific SL DRX configurations or UE pair specific SL DRX patterns or UE pair specific SL DRX configurations. Furthermore, for example, an on-duration term referred to in the present disclosure may be extended to an active time interval (a period of time when a UE is operating in a wake up state (RF module is on) to receive/transmit radio signals). Further, for example, off-duration term referred in proposals of the present disclosure may be extendedly interpreted as a sleep time (an interval during which a UE operates in a sleep mode state (RF module is off) to conserve power) duration. Further, for example, whether (some of) the proposed schemes/rules of this disclosure apply and/or the related parameters (e.g., thresholds) may be configured specifically (or differently or independently) depending on the resource pool, congestion level, service priority (and/or type), requirements (e.g., latency, reliability), traffic type (e.g., (aperiodic) generation), SL transport resource allocation mode (Mode 1, Mode 2), etc. For example, within the sleep time, it doesn't mean that a transmitting UE have to operate in sleep mode in mandatory. For example, if needed, even if it is within a sleep time, for a sensing operation/transmission operation, a UE may be allowed to perform as in an active time.

For example, whether to apply the proposals of the present disclosure (and/or related parameter configuration value) may be configured specifically (and/or, independently and/or differently) for at least one of a resource pool, service/packet type (and/or priority), QoS requirement (e.g., URLLC/EMBB traffic, reliability, latency), cast type (e.g., unicast, groupcast, broadcast), (resource pool) congestion level (e.g., CBR), SL HARQ feedback mode (e.g., NACK only feedback, ACK/NACK feedback), a HARQ feedback enabled MAC PDU (and/or a HARQ feedback disabled MAC PDU) transmission case, whether PUCCH based SL HARQ feedback reporting operation is configured, a case where pre-emption (and/or re-evaluation) (or, re-evaluation based resource reselection) is performed, (L2 or L1) (source and/or destination) ID, PC5 RRC connection/link, a case where an SL DRX is (not) performed (or, supported), SL mode type (resource allocation mode 1, resource allocation mode 2), a case where (a)periodic resource reservation is performed.

The term specific time as used in the present disclosure may refer to a predefined amount of time for a UE to receive sidelink signaling or sidelink data from another UE, or a period of time, or a specific timer (SL DRX retransmission timer, SL DRX inactivity timer, or a timer to ensure a receiving UE to operate as an active time in DRX operation) time, during which a UE is active.

Further, for example, whether the proposals and proposed rules in this disclosure apply (and/or the associated parameter configuration values) may also apply to mmWave SL operation.

According to the prior art, a receiving UE performing SL DRX operation may not be aware of the remaining PDB of a MAC PDU and may extend an active time unnecessarily. According to embodiments of the present disclosure, a receiving UE may be aware of the remaining PDB of a MAC PDU, and thus may not extend an active time if retransmissions are not expected within the remaining PDB, thereby improving power savings.

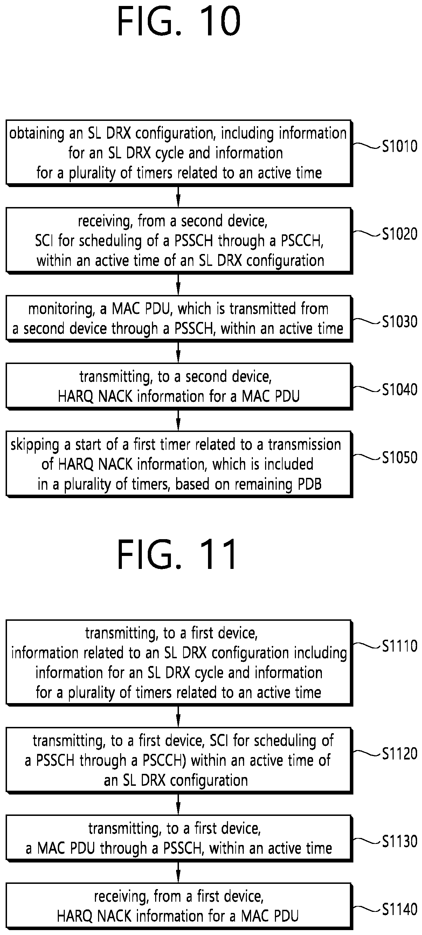

FIG. 10 shows a procedure for a first device to perform wireless communication, according to one embodiment of the present disclosure. The embodiment of FIG. 10 may be combined with various embodiments of the present disclosure.

Referring to FIG. 10, in step S1010, a first device may obtain a sidelink (SL) discontinuous reception (DRX) configuration, including information for an SL DRX cycle and information for a plurality of timers related to an active time. In step S1020, the first device may receive, from a second device, sidelink control information (SCI) for scheduling of a physical sidelink shared channel (PSSCH) through a physical sidelink control channel (PSCCH), within the active time of the SL DRX configuration. For example, the SCI may include information for remaining packet delay budget (PDB), related to a medium access control (MAC) protocol data unit (PDU). In step S1030, the first device may monitor, the MAC PDU, which is transmitted from the second device through the PSSCH, within the active time. In step S1040, the first device may transmit, to the second device, hybrid automatic repeat request (HARQ) negative acknowledge (NACK) information for the MAC PDU. In step S1050, the first device may skip a start of a first timer related to the transmission of the HARQ NACK information, which is included in the plurality of timers, based on the remaining PDB.

For example, additionally, the first device may determine that a retransmission for the MAC PDU to be performed based on the HARQ NACK information does not satisfy the remaining PDB.

For example, the skip may be performed based on the determination that the retransmission does not satisfy the remaining PDB.

For example, the determination that the retransmission does not satisfy the remaining PDB may be determined based on the remaining PDB and resource information included in the SCI

For example, additionally, the first device may stop a running second timer, which is included in the plurality of timers, based on the remaining PDB.

For example, the first timer may be the same as the second timer.

For example, additionally, the first device may transition to a sleep mode based on the stop of the second timer. For example, a device in the sleep mode may not perform monitoring for a data reception for a PSCCH or a PSSCH.

For example, additionally, the first device may transition to a sleep mode, based on the remaining PDB. For example, a device in the sleep mode may not perform monitoring for a data reception for a PSCCH or a PSSCH.

For example, the first timer may be an SL DRX inactivity timer.

For example, the first timer may be an SL DRX HARQ round trip time (RTT) timer.

For example, the first timer may be an SL DRX retransmission timer.

For example, the HARQ NACK information may be generated based on a decoding failure for the MAC PDU.

For example, the SL DRX configuration may be received from the second device.

The embodiments described above may be applied to various devices described below. First, a processor 102 of a first device 100 may obtain a sidelink (SL) discontinuous reception (DRX) configuration, including information for an SL DRX cycle and information for a plurality of timers related to an active time. And, the processor 102 of the first device 100 may control a transceiver 106 to receive, from a second device 200, sidelink control information (SCI) for scheduling of a physical sidelink shared channel (PSSCH) through a physical sidelink control channel (PSCCH), within the active time of the SL DRX configuration. For example, the SCI may include information for remaining packet delay budget (PDB), related to a medium access control (MAC) protocol data unit (PDU). And, the processor 102 of the first device 100 may monitor, the MAC PDU, which is transmitted from the second device 200 through the PSSCH, within the active time. And, the processor 102 of the first device 100 may control the transceiver 106 to transmit, to the second device 200, hybrid automatic repeat request (HARQ) negative acknowledge (NACK) information for the MAC PDU. And, the processor 102 of the first device 100 may skip a start of a first timer related to the transmission of the HARQ NACK information, which is included in the plurality of timers, based on the remaining PDB.

According to an embodiment of the present disclosure, a first device for performing wireless communication may be proposed. For example, the first device may comprise: one or more memories storing instructions; one or more transceivers; and one or more processors connected to the one or more memories and the one or more transceivers. For example, the one or more processors may execute the instructions to: obtain a sidelink (SL) discontinuous reception (DRX) configuration, including information for an SL DRX cycle and information for a plurality of timers related to an active time; receive, from a second device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); monitoring, the MAC PDU, which is transmitted from the second device through the PSSCH, within the active time; transmitting, to the second device, hybrid automatic repeat request (HARQ) negative acknowledge (NACK) information for the MAC PDU; and skipping a start of a first timer related to the transmission of the HARQ NACK information, which is included in the plurality of timers, based on the remaining PDB.

For example, additionally, the first device may determine that a retransmission for the MAC PDU to be performed based on the HARQ NACK information does not satisfy the remaining PDB.

For example, the skip may be performed based on the determination that the retransmission does not satisfy the remaining PDB.

For example, the determination that the retransmission does not satisfy the remaining PDB may be determined based on the remaining PDB and resource information included in the SCI

For example, additionally, the first device may stop a running second timer, which is included in the plurality of timers, based on the remaining PDB.

For example, the first timer may be the same as the second timer.

For example, additionally, the first device may transition to a sleep mode based on the stop of the second timer. For example, a device in the sleep mode may not perform monitoring for a data reception for a PSCCH or a PSSCH.

For example, additionally, the first device may transition to a sleep mode, based on the remaining PDB. For example, a device in the sleep mode may not perform monitoring for a data reception for a PSCCH or a PSSCH.

For example, the first timer may be an SL DRX inactivity timer.

For example, the first timer may be an SL DRX HARQ round trip time (RTT) timer.

For example, the first timer may be an SL DRX retransmission timer.

For example, the HARQ NACK information may be generated based on a decoding failure for the MAC PDU.

According to an embodiment of the present disclosure, a device adapted to control a first user equipment (UE) may be proposed. For example, the device may comprise: one or more processors; and one or more memories operably connectable to the one or more processors and storing instructions. For example, the one or more processors execute the instructions to: obtain a sidelink (SL) discontinuous reception (DRX) configuration, including information for an SL DRX cycle and information for a plurality of timers related to an active time; receive, from a second UE, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); monitoring, the MAC PDU, which is transmitted from the second UE through the PSSCH, within the active time; transmitting, to the second UE, hybrid automatic repeat request (HARQ) negative acknowledge (NACK) information for the MAC PDU; and skipping a start of a first timer related to the transmission of the HARQ NACK information, which is included in the plurality of timers, based on the remaining PDB.

According to an embodiment of the present disclosure, a non-transitory computer-readable storage medium storing instructions that, when executed, cause a first device to: obtain a sidelink (SL) discontinuous reception (DRX) configuration, including information for an SL DRX cycle and information for a plurality of timers related to an active time; receive, from a second device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU);

monitoring, the MAC PDU, which is transmitted from the second device through the PSSCH, within the active time; transmitting, to the second device, hybrid automatic repeat request (HARQ) negative acknowledge (NACK) information for the MAC PDU; and skipping a start of a first timer related to the transmission of the HARQ NACK information, which is included in the plurality of timers, based on the remaining PDB.

FIG. 11 shows a procedure for a second device to perform wireless communication, according to one embodiment of the present disclosure. The embodiment of FIG. 11 may be combined with various embodiments of the present disclosure.

Referring to FIG. 11, in step S1110, a second device may transmit, to a first device, information related to a sidelink (SL) discontinuous reception (DRX) configuration including information for an SL DRX cycle and information for a plurality of timers related to an active time. In step S1120, the second device may transmit, to the first device, sidelink control information (SCI) for scheduling of a physical sidelink shared channel (PSSCH) through a physical sidelink control channel (PSCCH), within the active time of the SL DRX configuration. For example, the SCI may include information for remaining packet delay budget (PDB), related to a medium access control (MAC) protocol data unit (PDU). In step S1130, the second device may transmit, to the first device, the MAC PDU through the PSSCH, within the active time. In step S1140, the second device may receive, from the first device, hybrid automatic repeat request (HARQ) negative acknowledge (NACK) information for the MAC PDU. For example, start of a first timer related to a transmission of the HARQ NACK information, which is included in the plurality of timers, may be skipped based on the remaining PDB.

For example, the first timer may be an SL DRX HARQ round trip time (RTT) timer.

The embodiments described above may be applied to various devices described below. First, a processor 202 of the second device 200 may control a transceiver 206 to transmit, to a first device 100, information related to a sidelink (SL) discontinuous reception (DRX) configuration including information for an SL DRX cycle and information for a plurality of timers related to an active time. And, the processor 202 of the second device 200 may control the transceiver 206 to transmit, to the first device 100, sidelink control information (SCI) for scheduling of a physical sidelink shared channel (PSSCH) through a physical sidelink control channel (PSCCH), within the active time of the SL DRX configuration. For example, the SCI may include information for remaining packet delay budget (PDB), related to a medium access control (MAC) protocol data unit (PDU). And, the processor 202 of the second device 200 may control the transceiver 206 to transmit, to the first device 100, the MAC PDU through the PSSCH, within the active time. And, the processor 202 of the second device 200 may control the transceiver 206 to receive, from the first device 100, hybrid automatic repeat request (HARQ) negative acknowledge (NACK) information for the MAC PDU. For example, start of a first timer related to a transmission of the HARQ NACK information, which is included in the plurality of timers, may be skipped based on the remaining PDB.

According to an embodiment of the present disclosure, a second device for performing wireless communication may be proposed. For example, the second device may comprise: one or more memories storing instructions; one or more transceivers; and one or more processors connected to the one or more memories and the one or more transceivers. For example, the one or more processors may execute the instructions to: transmit, to a first device, information related to a sidelink (SL) discontinuous reception (DRX) configuration including information for an SL DRX cycle and information for a plurality of timers related to an active time; transmit, to the first device, sidelink control information (SCI) for scheduling of a physical sidelink shared channel (PSSCH) through a physical sidelink control channel (PSCCH), within the active time of the SL DRX configuration, wherein the SCI may include information for remaining packet delay budget (PDB), related to a medium access control (MAC) protocol data unit (PDU); transmit, to the first device, the MAC PDU through the PSSCH, within the active time; and receive, from the first device, hybrid automatic repeat request (HARQ) negative acknowledge (NACK) information for the MAC PDU, wherein start of a first timer related to a transmission of the HARQ NACK information, which is included in the plurality of timers, may be skipped based on the remaining PDB.

For example, the first timer may be an SL DRX HARQ round trip time (RTT) timer.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

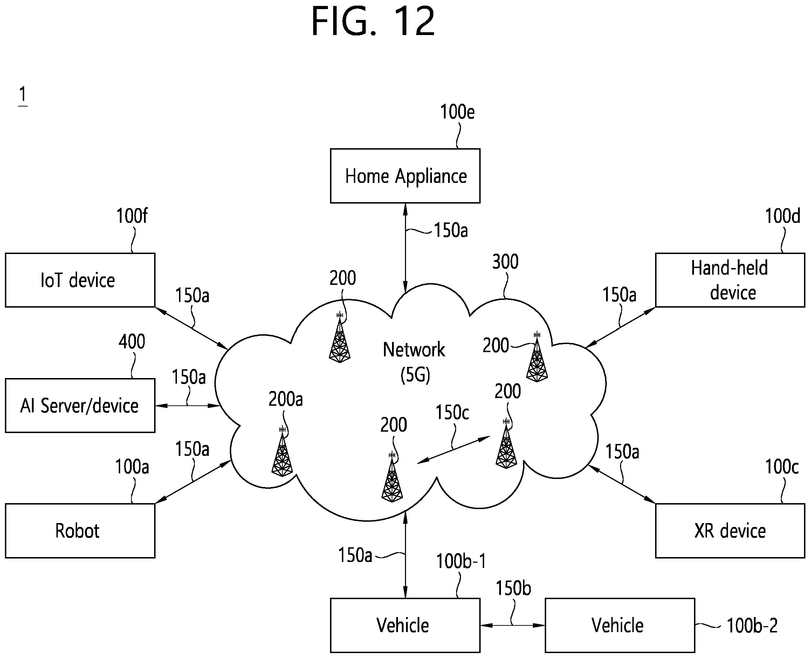

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, the wireless communication technologies implemented in the wireless devices 100a-100f of the present disclosure may include LTE, NR, and 6G, as well as Narrowband Internet of Things for low power communication. In this case, for example, NB-IoT technology may be an example of Low Power Wide Area Network (LPWAN) technology, and may be implemented in specifications such as LTE Cat NB1 and/or LTE Cat NB2, and is not limited to the above names. Additionally or alternatively, the wireless communication technology implemented in the wireless devices 100a-100f of this specification may perform communication based on LTE-M technology. In one example, LTE-M technology may be an example of LPWAN technology and may be referred to by various names, such as enhanced Machine Type Communication (eMTC). For example, LTE-M technology may be implemented as at least one of various specifications, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above names. Additionally or alternatively, the wireless communication technology implemented in the wireless devices 100a-100f of this disclosure may include at least one of ZigBee, Bluetooth, and Low Power Wide Area Network (LPWAN), with consideration for low power communication, and is not limited to the above names. For example, ZigBee technology can create personal area networks (PANs) for small, low-power digital communications based on various specifications, such as IEEE 802.15.4, and may be referred to by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

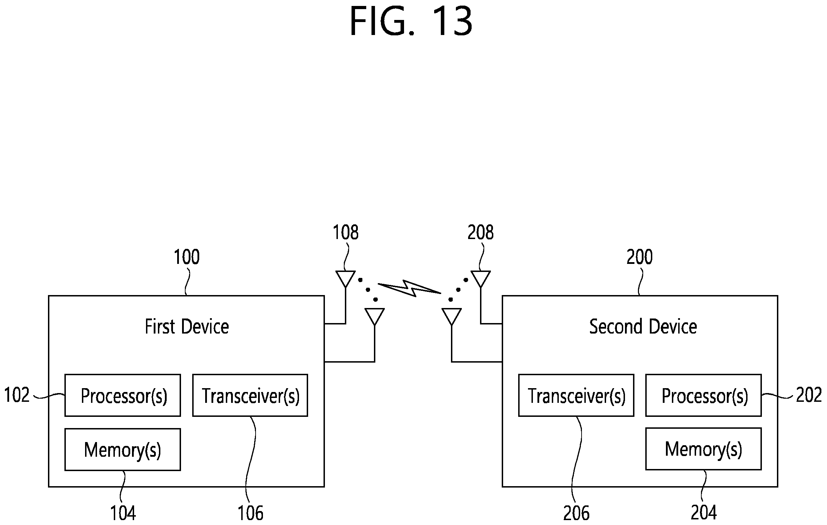

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

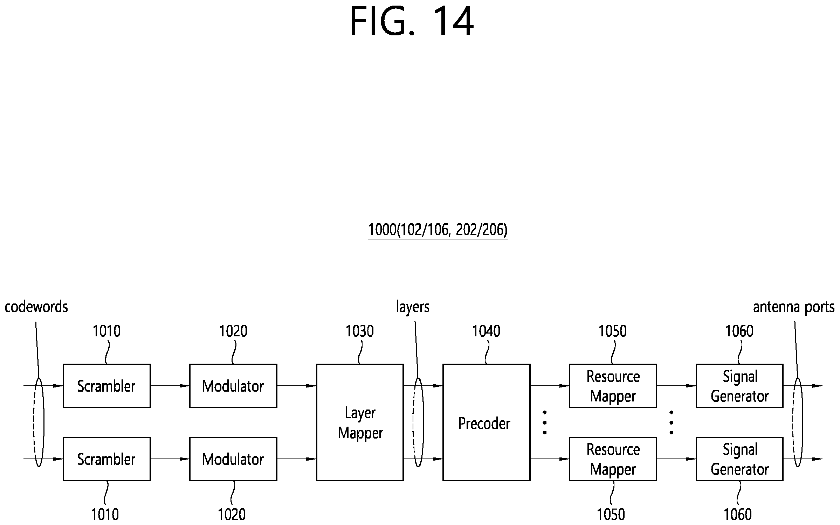

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

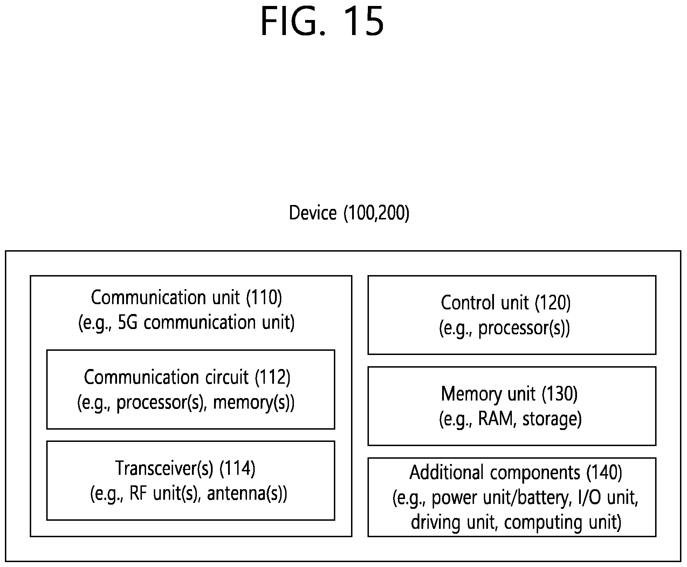

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

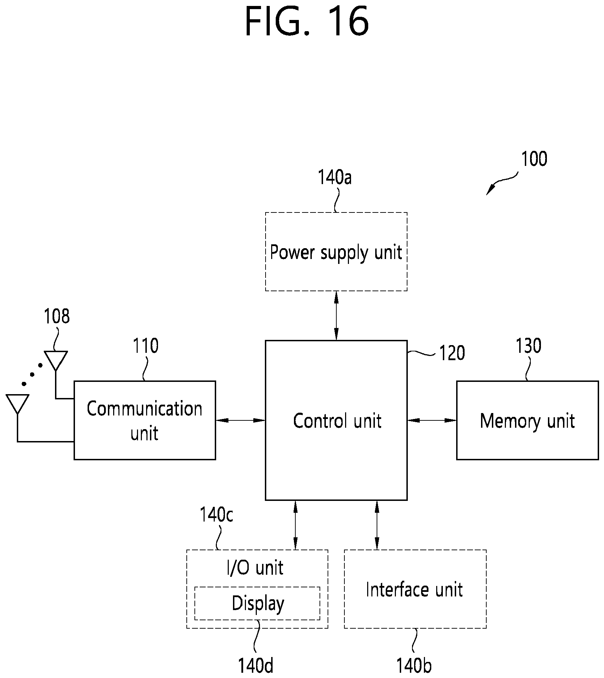

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

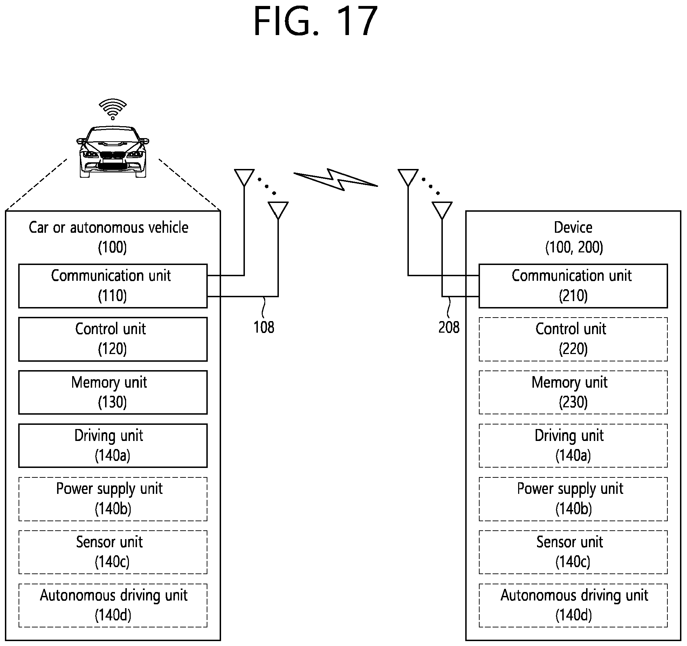

FIG. 17 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 17 may be combined with various embodiments of the present disclosure.

Referring to FIG. 17, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may deliver information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
obtaining a sidelink (SL) discontinuous reception (DRX) configuration, including information for an SL DRX cycle and information for a plurality of timers related to an active time;
receiving, from a second device, sidelink control information (SCI) for scheduling of a physical sidelink shared channel (PSSCH) through a physical sidelink control channel (PSCCH), within the active time of the SL DRX configuration,
wherein the SCI includes information for remaining packet delay budget (PDB), related to a medium access control (MAC) protocol data unit (PDU);
monitoring, the MAC PDU, which is transmitted from the second device through the PSSCH, within the active time;
transmitting, to the second device, hybrid automatic repeat request (HARQ) negative acknowledge (NACK) information for the MAC PDU; and
skipping a start of a first timer related to the transmission of the HARQ NACK information, which is included in the plurality of timers, based on the remaining PDB.

2. The method of claim 1, further comprising:
determining that a retransmission for the MAC PDU to be performed based on the HARQ NACK information does not satisfy the remaining PDB.

3. The method of claim 2, wherein the skip is performed based on the determination that the retransmission does not satisfy the remaining PDB.

4. The method of claim 2, wherein the determination that the retransmission does not satisfy the remaining PDB is determined based on the remaining PDB and resource information included in the SCI

5. The method of claim 1, further comprising:
stopping a running second timer, which is included in the plurality of timers, based on the remaining PDB.

6. The method of claim 5, wherein the first timer is the same as the second timer.

7. The method of claim 5, further comprising:
transitioning to a sleep mode based on the stop of the second timer,
wherein a device in the sleep mode does not perform monitoring for a data reception for a PSCCH or a PSSCH.

8. The method of claim 1, further comprising:
transitioning to a sleep mode, based on the remaining PDB,
wherein a device in the sleep mode does not perform monitoring for a data reception for a PSCCH or a PSSCH.

9. The method of claim 1, wherein the first timer is an SL DRX inactivity timer.

10. The method of claim 1, wherein the first timer is an SL DRX HARQ round trip time (RTT) timer.

11. The method of claim 1, wherein the first timer is an SL DRX retransmission timer.

12. The method of claim 1, wherein the HARQ NACK information is generated based on a decoding failure for the MAC PDU.

13. The method of claim 1, wherein the SL DRX configuration is received from the second device.

14. A first device for performing wireless communication, the first device comprising:
one or more memories storing instructions;
one or more transceivers; and
one or more processors connected to the one or more memories and the one or more transceivers, wherein the one or more processors execute the instructions to:
obtain a sidelink (SL) discontinuous reception (DRX) configuration, including information for an SL DRX cycle and information for a plurality of timers related to an active time;
receive, from a second device, sidelink control information (SCI) for scheduling of a physical sidelink shared channel (PSSCH) through a physical sidelink control channel (PSCCH), within the active time of the SL DRX configuration,
wherein the SCI includes information for remaining packet delay budget (PDB), related to a medium access control (MAC) protocol data unit (PDU);
monitoring, the MAC PDU, which is transmitted from the second device through the PSSCH, within the active time;
transmitting, to the second device, hybrid automatic repeat request (HARQ) negative acknowledge (NACK) information for the MAC PDU; and
skipping a start of a first timer related to the transmission of the HARQ NACK information, which is included in the plurality of timers, based on the remaining PDB.

15. A device adapted to control a first user equipment (UE), the device comprising:
one or more processors; and
one or more memories operably connectable to the one or more processors and storing instructions, wherein the one or more processors execute the instructions to:
obtain a sidelink (SL) discontinuous reception (DRX) configuration, including information for an SL DRX cycle and information for a plurality of timers related to an active time;
receive, from a second UE, sidelink control information (SCI) for scheduling of a physical sidelink shared channel (PSSCH) through a physical sidelink control channel (PSCCH), within the active time of the SL DRX configuration,
wherein the SCI includes information for remaining packet delay budget (PDB), related to a medium access control (MAC) protocol data unit (PDU);
monitoring, the MAC PDU, which is transmitted from the second UE through the PSSCH, within the active time;
transmitting, to the second UE, hybrid automatic repeat request (HARQ) negative acknowledge (NACK) information for the MAC PDU; and
skipping a start of a first timer related to the transmission of the HARQ NACK information, which is included in the plurality of timers, based on the remaining PDB.

16. A non-transitory computer-readable storage medium storing instructions that, when executed, cause a first device to:
obtain a sidelink (SL) discontinuous reception (DRX) configuration, including information for an SL DRX cycle and information for a plurality of timers related to an active time;
receive, from a second device, sidelink control information (SCI) for scheduling of a physical sidelink shared channel (PSSCH) through a physical sidelink control channel (PSCCH), within the active time of the SL DRX configuration,
wherein the SCI includes information for remaining packet delay budget (PDB), related to a medium access control (MAC) protocol data unit (PDU);
monitoring, the MAC PDU, which is transmitted from the second device through the PSSCH, within the active time;
transmitting, to the second device, hybrid automatic repeat request (HARQ) negative acknowledge (NACK) information for the MAC PDU; and
skipping a start of a first timer related to the transmission of the HARQ NACK information, which is included in the plurality of timers, based on the remaining PDB.

17. A method for performing, by a second device, wireless communication, the method comprising:
transmitting, to a first device, information related to a sidelink (SL) discontinuous reception (DRX) configuration including information for an SL DRX cycle and information for a plurality of timers related to an active time;
transmitting, to the first device, sidelink control information (SCI) for scheduling of a physical sidelink shared channel (PSSCH) through a physical sidelink control channel (PSCCH), within the active time of the SL DRX configuration,
wherein the SCI includes information for remaining packet delay budget (PDB), related to a medium access control (MAC) protocol data unit (PDU);
transmitting, to the first device, the MAC PDU through the PSSCH, within the active time; and
receiving, from the first device, hybrid automatic repeat request (HARQ) negative acknowledge (NACK) information for the MAC PDU,
wherein start of a first timer related to a transmission of the HARQ NACK information, which is included in the plurality of timers, is skipped based on the remaining PDB.

18. The method of claim 17, wherein the first timer is an SL DRX HARQ round trip time (RTT) timer.

19. A second device for performing wireless communication, the second device comprising:
one or more memories storing instructions;
one or more transceivers; and
one or more processors connected to the one or more memories and the one or more transceivers, wherein the one or more processors execute the instructions to:
transmit, to a first device, information related to a sidelink (SL) discontinuous reception (DRX) configuration including information for an SL DRX cycle and information for a plurality of timers related to an active time;
transmit, to the first device, sidelink control information (SCI) for scheduling of a physical sidelink shared channel (PSSCH) through a physical sidelink control channel (PSCCH), within the active time of the SL DRX configuration,
wherein the SCI includes information for remaining packet delay budget (PDB), related to a medium access control (MAC) protocol data unit (PDU);
transmit, to the first device, the MAC PDU through the PSSCH, within the active time; and
receive, from the first device, hybrid automatic repeat request (HARQ) negative acknowledge (NACK) information for the MAC PDU,
wherein start of a first timer related to a transmission of the HARQ NACK information, which is included in the plurality of timers, is skipped based on the remaining PDB.

20. The second device of claim 19, wherein the first timer is an SL DRX HARQ round trip time (RTT) timer.
